(19) 

Europäisches
Patentamt

European
Patent Office

Office européen
des brevets

(11) **EP 4 786 630 A1**

(12) **EUROPEAN PATENT APPLICATION**
published in accordance with Art. 153(4) EPC

(43) Date of publication:
**05.08.2026 Bulletin 2026/32**

(21) Application number: 25842100.7

(22) Date of filing: **03.09.2025**

(51) International Patent Classification (IPC):
*C22C 38/00* (2006.01)    *C22C 38/16* (2006.01)
*C21D 9/46* (2006.01)    *C22C 38/60* (2006.01)
*C23C 26/00* (2006.01)

(52) Cooperative Patent Classification (CPC):
**C22C 38/00; C22C 38/16;** C21D 9/46; C22C 38/60;
C23C 26/00; Y02P 10/20

(86) International application number:
**PCT/JP2025/031062**

(87) International publication number:
**WO 2026/053977 (12.03.2026 Gazette 2026/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  05.09.2024  JP 2024153380

(71) Applicant: NIPPON STEEL CORPORATION
Tokyo 100-8071 (JP)

(72) Inventors:
• **KIREKAWA, Naoto**
**Tokyo 100-8071 (JP)**
• **MITSUNOBU, Takuya**
**Tokyo 100-8071 (JP)**

(74) Representative: **Vossius & Partner**
**Patentanwälte Rechtsanwälte mbB
Siebertstraße 3
81675 München (DE)**

(54) **STEEL SHEET AND COMPONENT INCLUDING SAME**

(57)    The present invention has as its object the provision of a steel sheet containing Ni, Cu, and Sn and having excellent chemical convertibility even in the case where a certain time elapses after degreasing and of a part containing the same.

A steel sheet and a part containing thereof according to the present invention are characterized, in which a chemical composition of the steel sheet contains, by mass%, Mn: 1.20 to 3.00%, Ni: 0.010 to 1.000%, Cu: 0.010 to 1.000%, Sn: 0.003 to 1.000% and Si: 0.01 to less than 0.75% and satisfies Mn/(Si+Mn)>0.80, and a number $N_{30}$ per 10 $\mu$m of Mn oxides exposed at the surface of the steel sheet with a circle equivalent diameter of 30 nm or more satisfies $N_{30} \geq 20$.

Fig. 1

**Description**

FIELD

The present invention relates to a steel sheet and a part containing the same.

BACKGROUND

To improve the corrosion resistance of a steel sheet, raising the chemical convertibility of the surface of the steel sheet and making a conversion coating uniformly form on the surface of that steel sheet is effective.

In relation to this, for example, PTL 1 discloses a method of production of a high strength cold rolled steel sheet comprising using a continuous annealing furnace with a cooling zone including part or all of a 600 to 250°C steel sheet temperature range following heating for recrystallization and with a cooling system of one of more of gas cooling, dissipative cooling, and cooling tube cooling, or a facility for both a cold rolled steel sheet/hot dip galvanized steel sheet having a continuous annealing furnace, to continuously anneal a high strength cold rolled steel sheet, during which exposing a surface of the steel sheet to an iron oxidizing atmosphere in that steel sheet temperature range, pickling it at an annealing furnace exit side, then iron or Ni plating it to 1 to 50 mg/m$^2$. Furthermore, this PTL 1 teaches that while usually the steel sheet surroundings are rendered an ultralow concentration oxygen and/or ultralow dew point inert atmospheric gas to prevent oxidation of the steel sheet, conversely to the above, by deliberately exposing the sheet to an oxidizing atmosphere, making Si, Mn, and even the iron of the steel sheet oxidize, and, in the pickling when exiting the annealing furnace, removing the iron oxide film of the steel sheet along with the Si, Mn, and other oxide film by the pickling, a high strength cold rolled steel sheet free from "bald spots" even if the contents of Si, Mn, etc. are high and excellent in chemical convertibility is obtained.

Further, PTL 2 discloses a steel sheet for automotive use containing copper (Cu) in 0.10 mass% or more and 0.50 mass% or less, having a number of particles of residual scale at the surface of 160,000/mm$^2$ or less, and having a maximum size of copper compound particles exposed at the surface of 2 $\mu$m or less. Furthermore, PTL 2 teaches that by this constitution, since the size of the copper compound particles of the steel sheet serving as cathode points in chemical conversion is made 2 $\mu$m or less and the residual scale is made a predetermined amount or less, it is possible to provide a steel sheet excellent in chemical convertibility.

[CITATION LIST]

[PATENT LITERATURE]

[PTL 1] Japanese Unexamined Patent Publication No. 2008-190030
[PTL 2] Japanese Unexamined Patent Publication No. 2020-084238

SUMMARY

[TECHNICAL PROBLEM]

The above PTL 2 teaches that, in addition to copper (Cu), nickel (Ni), tin (Sn), and other elements cause a drop in the strength, shapeability, and other mechanical properties of a steel sheet for automobile use plus the corrosion resistance and other chemical stability, in particular that the copper compounds present on the surface of the steel sheet cause a drop in the chemical convertibility for improving the corrosion resistance.

Further, chemical conversion of a steel sheet is generally performed by dipping the steel sheet in a chemical conversion solution after degreasing it by a degreasing agent, but in particular if the steel sheet contains copper (Cu), nickel (Ni), and tin (Sn), it is necessary to control the time from degreasing the steel sheet to the chemical conversion extremely strictly and in a short time. If a certain time (for example, 10 minutes or more) elapses after degreasing, the chemical convertibility is liable to remarkably fall.

Therefore, the present invention has as its object the provision of a steel sheet containing Ni, Cu, and Sn and having excellent chemical convertibility even in the case where a certain time elapses after degreasing and of a part containing the same.

[SOLUTION TO PROBLEM]

The present invention includes at least the following aspects:

(Aspect 1)

A steel sheet comprising:

a chemical composition containing, by mass%,
Mn: 1.20 to 3.00%,
Ni: 0.010 to 1.000%,
Cu: 0.010 to 1.000%,
Sn: 0.003 to 1.000%, and
Si: 0.01 to less than 0.75% and
satisfies $Mn/(Si+Mn)>0.80$, and
a number $N_{30}$ per 10 $\mu$m of Mn oxides exposed at the surface of the steel sheet with a circle equivalent diameter of 30 nm or more satisfies $N_{30} \geq 20$.

(Aspect 2)

The steel sheet according to the aspect 1, wherein the number $N_{30}$ per 10 $\mu$m of Mn oxides exposed at the surface of the steel sheet satisfies $N_{30} \geq 30$ with a circle equivalent diameter of 30 nm or more.

(Aspect 3)

The steel sheet according to the aspect 1 or 2, wherein a Cu concentration measured by high frequency glow optical emission spectrometry in a thickness direction from a surface of the steel sheet satisfies (depth 5 nm Cu concentration)/(depth 10 $\mu$m Cu concentration)$\leq 10.0$.

(Aspect 4)

The steel sheet according to the aspect 1 or 2, wherein a Cu concentration measured by high frequency glow optical emission spectrometry in a thickness direction from a surface of the steel sheet satisfies (depth 5 nm Cu concentration)/(depth 10 $\mu$m Cu concentration)$\leq 7.0$.

(Aspect 5)

The steel sheet according to any one of the aspects 1 to 4, wherein the chemical composition of the steel sheet contains, by mass%,

Ni: 0.040 to 1.000%,
Cu: 0.040 to 1.000%, and
Sn: 0.004 to 1.000%.

(Aspect 6)

The steel sheet according to any one of the aspects 1 to 5, having a conversion coating on the surface of the steel sheet.

(Aspect 7)

The steel sheet according to the aspect 6, wherein a ratio of hopeite in chemical conversion crystals in the conversion coating measured by X-ray diffraction is 50% or more.

(Aspect 8)

A part including a steel sheet according to any one of the aspects 1 to 7.

[ADVANTAGEOUS EFFECTS OF INVENTION]

According to the present invention, it is possible to provide a steel sheet containing Ni, Cu, and Sn having excellent chemical convertibility even in the case where a certain time elapses after degreasing and provide a part containing the same.

BRIEF DESCRIPTION OF DRAWINGS

FIG. 1 is a schematic view for explaining a method of measurement of a number $N_{30}$ per 10 $\mu$m of Mn oxides with a magnitude of circle equivalent diameter of 30 nm or more exposed at a surface of a steel sheet.
FIG. 2 is a schematic view for explaining a method of measurement of a magnitude R of circle equivalent diameter of Mn oxides exposed at a surface of a steel sheet.

DESCRIPTION OF EMBODIMENTS

In general, if a steel sheet drops in chemical convertibility, regions called "bald spots" where no conversion coating is formed sometimes occur. As a result, the corrosion resistance sometimes falls. For example, if Ni, Cu, Sn, and other elements are present dissolved in a steel sheet, the potential of the steel sheet becomes more precious compared with the potential in the state where these elements are not dissolved and, at the time of chemical conversion, sometimes the etchability of Fe falls. In such a case, it becomes harder for a conversion coating to be formed, therefore the chemical convertibility falls and as a result the corrosion resistance ends up falling. Therefore, if a steel sheet simultaneously contains the three elements of Ni, Cu, and Sn, such a fall in the chemical convertibility particularly becomes a problem. Further, if Ni, Cu, Sn, and other elements remain dissolved in the steel sheet, it becomes easier for a conversion coating to be formed at the steel sheet. Unless controlling the time from degreasing to chemical conversion strictly and in a short time, the chemical convertibility remarkably falls and as a result the corrosion resistance ends up falling.

As the method for producing steel, two types of methods are generally known: the method of using the natural resource of iron ore as the main raw material for obtaining molten iron at a blast furnace, then refining this at a converter etc. to produce molten steel and the method of using the recycled resource of scrap metal as the main raw material for producing molten steel at an electric furnacer. The steel produced by the former method, that is, the blast furnace material, can contain Ni, Cu, Sn, and other elements as added elements, therefore it is necessary to suitably deal with this issue if these elements are contained. On the other hand, in the steel produced by the latter method, that is, the electric furnace material, since as explained above, scrap metal is used as the main raw material, Ni, Cu, Sn, and other scrap derived elements (so-called "tramp elements") are contained in relatively large amounts. In addition, the three elements of Ni, Cu, and Sn are easily simultaneously contained. Therefore, in the electric furnace material, this issue particularly becomes prominent.

Therefore, the inventors engaged in intensive studies to deal with the drop in chemical convertibility in the case where a certain time (i.e., 10 minutes) elapses in the time from degreasing to chemical conversion. As a result, they discovered that external oxides of Mn can dissolve and cause precipitation of chemical conversion crystals in place of the base material at the time of chemical conversion and can improve the chemical convertibility of steel sheet in the case where a certain time (i.e., 10 minutes) elapses in the time from degreasing to chemical conversion. On the other hand, if Cu concentrates at the steel sheet surface layer, if Si or Al contained in the steel is contained, it may be that oxidation of Al is promoted and external oxides of these elements are made to form at the surface of the steel sheet. If external oxides of these elements are formed, formation of external oxides of Mn is suppressed and a sufficient effect of improvement of the chemical convertibility by external oxides of Mn is not obtained. Note that in this Description, oxides formed at the surface of the steel sheet and exposed from the surface of the steel sheet will be referred to as "external oxides" while oxides formed inside of the steel sheet and not exposed from the surface of the steel sheet will be referred to as "internal oxides".

The inventors discovered that even with a steel sheet containing the three elements of Ni, Cu, and Sn, by employing the specific technique of making the chemical composition of the obtained steel sheet one containing Mn in 1.20 to 3.00%, Ni in 0.010 to 1.000%, Cu in 0.010 to 1.000%, Sn in 0.003 to 1.000%, and Si in 0.01 to less than 0.75% and satisfying Mn/(Si+Mn)>0.80, brush grinding the hot rolled steel sheet after pickling, and performing an annealing step by a specific dew point condition and heat pattern, it is possible to make a large amount of Mn oxides exposed at the surface of the steel sheet with a magnitude of circle equivalent diameter of 30 nm or more, that is, a number $N_{30}$ per 10 $\mu$m of Mn oxides satisfying $N_{30} \geq 20$, form at the surface of the steel sheet. Further, the inventors discovered that by making a large amount of Mn oxides form at the surface of the steel sheet in this way, at the time of chemical conversion, it is possible to make the Mn oxides dissolve instead of the base material and cause precipitation of a sufficient amount of chemical conversion crystals and possible to remarkably improve the chemical convertibility in the case of elapse of a certain time (i.e., 10 minutes) after degreasing.

The present invention was completed based on the above such discoveries and includes the following aspects of an embodiment:

Below, a preferred embodiment of the steel sheet of the present invention will be explained in detail.

<Steel Sheet>

The steel sheet according to one embodiment of the present invention has a specific chemical composition containing, by mass%, Mn: 1.20 to 3.00%, Ni: 0.010 to 1.000%, Cu: 0.010 to 1.000%, Sn: 0.003 to 1.000%, and Si: 0.01 to less than 0.75% and satisfying Mn/(Si+Mn)>0.80.

Further, the steel sheet of the present embodiment is provided with a characteristic constitution of a number $N_{30}$ per 10 $\mu$m of Mn oxides exposed at the surface of the steel sheet with a circle equivalent diameter of 30 nm or more satisfying $N_{30} \geq 20$.

In general, in chemical conversion, anodic dissolution of Fe (etching) occurs, whereupon electrons are generated. On the other hand, the electrons generated by the anodic dissolution of Fe cause a cathodic reaction $(2H^+ + 2e^- \rightarrow H_2, 10H^+ + NO_3^- + 8e^- \rightarrow NH_4^+ + 3H_2O)$ to occur. In turn, the pH of the chemical conversion solution near the surface of the steel sheet rises. Along with this, zinc phosphate crystals and other compounds precipitate forming a conversion coating at the surface of the steel sheet.

In this regard, in a steel sheet with Ni, Cu, and Sn present dissolved in the steel sheet, compared with one where these elements are not dissolved, the potential of the steel sheet becomes precious and sometimes, at the time of chemical conversion, the etchability of Fe falls. Further, Cu, as explained above, concentrates at the surface of the steel sheet at the time of the annealing step and promotes the oxidation of the Si contained in the steel and, if Cr is contained, the Cr, to make external oxides of these elements form at the surface of the steel sheet. The external oxides of these elements sometimes do not sufficiently dissolve in the chemical conversion solution at the time of chemical conversion, therefore if external oxides of these elements are excessively present at the surface of the steel sheet, dissolution of the base material is inhibited and chemical conversion crystals become harder to precipitate and the chemical convertibility of the steel sheet falls.

The steel sheet of the present embodiment, even if a steel sheet containing the three elements of Ni, Cu, and Sn, employs the later explained technique so that a large amount of Mn oxides exposed at the surface of the steel sheet with a magnitude of circle equivalent diameter of 30 nm or more, that is, a number $N_{30}$ per 10 $\mu$m of Mn oxides satisfying $N_{30} \geq 20$, is formed at the surface of the steel sheet, therefore at the time of chemical conversion, it is possible to make Mn oxides dissolve in place of the base material and cause precipitation of a sufficient amount of chemical conversion crystals and possible to obtain excellent chemical convertibility even in the case of elapse of a certain time (i.e., 10 minutes) after degreasing. The chemical convertibility is degraded if a certain time elapses after degreasing because the Sn, Ni, and Cu in the base material easily form oxide coatings after degreasing, but in the steel sheet of the present embodiment, external oxides of Mn are formed, so even if oxide coatings are formed, the external oxides of Mn dissolve instead and can secure chemical convertibility.

Note that, the steel sheet of the present embodiment covers not only electric furnace materials unavoidably containing Ni, Cu, and Sn as tramp elements, but also blast furnace materials containing Ni, Cu, and Sn as essential elements or optional elements. Further, according to the steel sheet of the present embodiment, compared with a conventional steel sheet simultaneously containing the three elements of Ni, Cu, and Sn, it is possible to obtain excellent chemical convertibility and in turn obtain excellent corrosion resistance. Therefore, the steel sheet of the present embodiment is particularly useful in the field of automobiles where excellent chemical convertibility and corrosion resistance is demanded.

Below, the constituent elements of the steel sheet of the present embodiment will be explained in detail.

[Chemical Composition]

In the present embodiment, the steel sheet has a specific chemical composition containing, by mass%, Mn: 1.20 to 3.00%, Ni: 0.010 to 1.000%, Cu: 0.010 to 1.000%, Sn: 0.003 to 1.000%, and Si: 0.01 to 0.75%, and satisfying Mn/(Si+Mn) >0.80. The present invention has as its object, as explained above, the provision of a steel sheet containing Ni, Cu, and Sn having excellent chemical convertibility even in the case of an elapse of a certain time after degreasing and achieves that object by making a large amount of Mn oxides exposed at the surface of the steel sheet with a magnitude of circle equivalent diameter of 30 nm or more, that is, a number $N_{30}$ per 10 $\mu$m of Mn oxides satisfying $N_{30} \geq 20$, form at the surface of the steel sheet.

Therefore, the chemical composition of the steel sheet is not particularly limited so long as containing, by mass%, Mn: 1.20 to 3.00%, Ni: 0.010 to 1.000%, Cu: 0.010 to 1.000%, Sn: 0.003 to 1.000% , and Si: 0.01 to 0.75% and satisfying Mn/(Si+Mn)>0.80.

Note that, regarding Ni, Cu, and Sn, from the viewpoints of the chemical convertibility, strength, and corrosion resistance of the steel sheet, Ni is preferably, by mass%, 0.040% or more. Further, Ni is preferably, by mass%, 1.000% or less. Similarly, Cu is preferably, by mass%, 0.040% or more. Further, Cu is preferably, by mass%, 1.000% or less. Similarly, Sn is preferably, by mass%, 0.004% or more. Further, Sn is preferably, by mass%, 1.000% or less. Note that, the preferable contents etc. of these elements will be explained later.

In particular, in the present embodiment, the chemical composition of the steel sheet preferably contains, by mass%, Ni: 0.040 to 1.000%, Cu: 0.040 to 1.000%, and Sn: 0.004 to 1.000%.

The chemical composition of the steel sheet of the present embodiment can contain, in addition to Ni, Cu, and Sn, any alloying elements generally added in the technical field of the present invention in amounts within suitable ranges.

Below, the chemical composition able to be employed in the steel sheet of the present embodiment will be explained in detail. The following explanation is intended to simply illustrate the chemical composition of a steel sheet for application as a steel sheet for automobile use and is not intended to limit the present invention to a steel sheet having such a specific chemical composition.

For example, the steel sheet of the present embodiment may have a chemical composition containing, by mass%,

C: 0.001 to 0.500%,
Si: 0.01 to less than 0.75%,
Mn: 1.20 to 3.00%,
Al: 0.001 to 2.000%,
Ni: 0.010 to 1.000%,
Cu: 0.010 to 1.000%,
Sn: 0.003 to 1.000%,
P: 0.100% or less,
S: 0.100% or less,
N: 0.0150% or less,
O: 0.0100% or less,
Ti: 0 to 0.150%,
Nb: 0 to 0.150%,
B: 0 to 0.0100%,
Mo: 0 to 1.000%,
Cr: 0 to 1.000%,
V: 0 to 0.150%,
W: 0 to 1.000%,
Hf: 0 to 0.050%,
Mg: 0 to 0.050%,
Zr: 0 to 0.500%,
Ca: 0 to 0.050%,
REM: 0 to 0.100%,
As: 0 to 0.100%,
Ir: 0 to 1.000%, and
a balance: Fe and impurities. Note that, this chemical composition satisfies

$$Mn/(Si+Mn) > 0.80.$$

Below, these elements will be explained in further detail.

[C: 0.001 to 0.500%]

C is an element inexpensively making the strength increase and is an important element for controlling the strength of the steel. To sufficiently obtain such an effect, the C content is preferably 0.001% or more. The C content may also be 0.005% or more, 0.010% or more, 0.030% or more, 0.040% or more, 0.070% or more, 0.100% or more, 0.150% or more, or 0.200% or more. On the other hand, if excessively containing C, sometimes a drop in elongation is invited. For this reason, the C content is preferably 0.500% or less. The C content may also be 0.450% or less, 0.400% or less, 0.350% or less, 0.300% or less, or 0.250% or less.

[Si: 0.01 to less than 0.75%]

Si is an element effective for raising strength as a solution strengthening element. Further, Si is formed surrounding Si oxides as nuclei. It is also an element contributing to the formation of external oxides of Mn. To sufficiently obtain these effects, the Si content is 0.01% or more. The Si content may also be 0.05% or more, 0.10% or more, 0.15% or more, 0.20% or more, 0.25% or more, or 0.30% or more. On the other hand, if excessively containing Si, sometimes, along with an increase in steel strength, a drop in elongation is invited. For this reason, the Si content is less than 0.75%. The Si content may also be 0.70% or less, 0.65% or less, 0.60% or less, 0.55% or less, or 0.50% or less. Note that, the Si content, as explained later, has to satisfy the relationship of Mn/(Si+Mn)>0.80.

[Mn: 1.20 to 3.00%]

Mn is an element raising the quenchability of the steel and is an element effective for raising the strength. Further, Mn is an important element forming external oxides at the surface of the steel sheet and contributing to improvement of the chemical convertibility.
To sufficiently obtain such an effect, the Mn content is 1.20% or more. The Mn content may also be 1.40% or more, 1.60% or more, 1.80% or more, or 2.00% or more. On the other hand, if excessively containing Mn, sometimes, along with an increase in steel strength, a drop in elongation is invited. Therefore, the Mn content is 3.00% or less. The Mn content may also be 2.80% or less or 2.60% or less. Note that, the Mn content, as explained later, has to satisfy the relationship of Mn/(Si+Mn)>0.80.

[Al: 0.001 to 2.000%]

Al is an element acting as a deoxidizer of the steel and acting to make the steel sounder. To sufficiently obtain such an effect, the Al content is preferably 0.001% or more. The Al content may also be 0.005% or more, 0.010% or more, 0.020% or more, or 0.030% or more. On the other hand, if excessively containing Al, sometimes coarse Al oxides are formed and the elongation of steel sheet falls. For this reason , the Al content is preferably 2.000% or less. The Al content may also be 1.500% or less, 1.000% or less, 0.500% or less, 0.100% or less, or 0.050% or less.

[Ni: 0.010 to 1.000%]

[Cu: 0.010 to 1.000%]

Ni and Cu are elements contributing to improvement of precipitation strengthening or solution strengthening. To sufficiently obtain such an effect, the Ni and Cu content are respectively 0.010% or more. The Ni and Cu contents may also be respectively 0.020% or more, 0.030% or more, 0.040% or more, 0.050% or more, 0.080% or more, 0.100% or more, 0.150% or more, or 0.200% or more. On the other hand, if excessively containing these elements, sometimes formation of oxides at the surface of the steel sheet, in particular Si-based surface oxides or iron oxides, is excessively promoted. Therefore, the Ni and Cu contents are respectively 1.000% or less. The Ni and Cu contents may also be respectively 0.800% or less, 0.600% or less, 0.400% or less, or 0.300% or less.

[Sn: 0.003 to 1.000%]

Sn is an element effective for raising the corrosion resistance. To sufficiently obtain such an effect, the Sn content is 0.003% or more. The Sn content may also be 0.004% or more, 0.008% or more, 0.010% or more, 0.020% or more, 0.030% or more, 0.040% or more, 0.050% or more, 0.080% or more, or 0.100% or more. On the other hand, if excessively containing Sn, sometimes formation of oxides at the surface of the steel sheet, in particular Si-based surface oxides or iron oxides, is excessively promoted. Therefore, the Sn content is 1.000% or less. The Sn content may also be 0.800% or less, 0.600% or less, 0.400% or less, 0.300% or less, or 0.200% or less.

[P: 0.100% or Less]

P is an element segregating at the grain boundaries and promoting embrittlement of the steel. The smaller the P content, the more preferable. Ideally, it is 0%. However, excessive reduction of the P content sometimes invites a great increase in the production costs. For this reason, the P content may also be 0.0001% or more and may also be 0.001% or more or 0.005% or more. On the other hand, if excessively containing P, as explained above, sometimes embrittlement of the steel is invited due to grain boundary segregation. Therefore, the P content is preferably 0.100% or less. The P content may also be 0.050% or less, 0.030% or less, 0.020% or less, or 0.010% or less.

[S: 0.100% or Less]

S is an element forming MnS and other nonmetallic inclusions in the steel and inviting a drop in ductility of the steel material part. The smaller the S content, the more preferable. Ideally it is 0%. However, excessive reduction of the S content sometimes invites a large increase in the production costs. For this reason, the S content may be 0.0001% or more and may be 0.0005% or more, 0.001% or more, or 0.002% or more. On the other hand, if excessively containing S, sometimes occurrence of cracks starting from the nonmetallic inclusions is invited at the time of cold working. Therefore, the S content is preferably 0.100% or less. The S content may also be 0.050% or less, 0.020% or less, or 0.010% or less.

[N: 0.0150% or Less]

N is an element forming coarse nitrides in the steel sheet and causing the workability of the steel sheet to fall. The smaller than N content, the more preferable. Ideally it is 0%. However, excessive reduction of the N content sometimes invites a large increase in the production costs. For this reason, the N content may be 0.0001% or more and may be 0.0005% or more or 0.0010% or more. On the other hand, if excessively containing N, as explained above, sometimes coarse nitrides are formed and the workability of the steel sheet is made to fall. Therefore, the N content is preferably 0.0150% or less. The N content may also be 0.0080% or less, 0.0050% or less, or 0.0030% or less.

[O: 0.0100% or Less]

O is an element entering in the production process to form coarse inclusions and causes the workability of the steel sheet to fall. The smaller the O content, the more preferable. Ideally it is 0%. However, excessive reduction of the O content sometimes invites a large increase in the production costs. For this reason, the O content may be 0.0001% or more and may be 0.0005% or more or 0.0010% or more. On the other hand, if excessively containing O, as explained above, sometimes coarse inclusions are formed and the workability of the steel sheet is made to decrease. Therefore, the O content is preferably 0.0100% or less. The O content may also be 0.0080% or less, 0.0060% or less, or 0.0040% or less.

The preferable basic chemical composition of the steel sheet of the present embodiment is as explained above. Furthermore, the steel sheet of the present embodiment may, in accordance with need, contain at least one of the following elements in place of part of the balance of Fe.

[Ti: 0 to 0.150%]
[Nb: 0 to 0.150%]
[V: 0 to 0.150%]

Ti, Nb, and V form carbonitrides in the steel to give the effect of improving the strength of the steel sheet by precipitation strengthening. The Ti, Nb, and V contents may also be 0%, but to sufficiently obtain such effects, the Ti, Nb, and V contents are preferably respectively 0.001% or more. The Ti, Nb, and V contents may also be respectively 0.002% or more, 0.005% or more, or 0.010% or more. On the other hand, even if containing much more of these elements, the effect becomes saturated. Inclusion of more than necessary in the steel material invites a rise in production costs. Therefore, the Ti, Nb, and V contents are preferably respectively 0.150% or less. The Ti, Nb, and V contents may also be respectively 0.120% or less, 0.100% or less, 0.080% or less, 0.050% or less, 0.020% or less, or 0.015% or less.

[B: 0 to 0.0100%]

B segregates at the grain boundaries to raise the grain boundary strength and thereby has the effect of improving the low temperature toughness. The B content may also be 0%, but to sufficiently obtain the above such effect, the B content is preferably 0.0001% or more. The B content may also be 0.0002% or more, 0.0005% or more, or 0.0010% or more. On the other hand, even if B is contained much more, the effect becomes saturated and a rise in production costs is liable to be invited. Therefore, the B content is preferably 0.0100% or less. The B content may also be 0.0050% or less, 0.0030% or less, 0.0020% or less, or 0.0015% or less.

[Mo: 0 to 1.000%]
[Cr: 0 to 1.000%]
[W: 0 to 1.000%]

Mo, Cr, and W are elements raising the quenchability of the steel and contributing to improvement of the strength.

The Mo, Cr, and W contents may also be 0%, but to sufficiently obtain such effects, the Mo, Cr, and W contents are preferably respectively 0.001% or more. The Mo, Cr, and W contents may also be respectively 0.010% or more, 0.020% or more, or 0.030% or more. On the other hand, even if these elements are contained much more, the effects become saturated. Inclusion of more than necessary in the steel material invites a rise in production costs. Therefore, the Mo, Cr, and W contents are preferably respectively 1.000% or less. The Mo, Cr, and W contents may also be respectively 0.500% or less, 0.100% or less, 0.050% or less, or 0.040% or less.

[Hf: 0 to 0.050%]
[Mg: 0 to 0.050%]
[Zr: 0 to 0.500%]
[Ca: 0 to 0.050%]
[REM: 0 to 0.100%]

Hf, Mg, Zr, Ca, and REM are elements enabling control of the form of the nonmetallic inclusions. The Hf, Mg, Zr, Ca, and REM contents may also be 0%, but to sufficiently obtain such an effect, the Hf, Mg, Zr, Ca, and REM contents are preferably respectively 0.0001% or more. The Hf, Mg, Zr, Ca, and REM contents may also be respectively 0.0005% or more or 0.001 % or more. On the other hand, even if these elements are contained much more, the effect becomes saturated. Inclusion of more than necessary in the steel material invites a rise in production costs. Therefore, the Hf and Mg contents are preferably respectively 0.050% or less, while the Zr content is preferably 0.500% or less. The Hf, Mg, and Zr contents may also be respectively 0.010% or less, 0.005% or less, or 0.003% or less. Similarly, the Ca content is preferably 0.050% or less and the REM content is preferably 0.100% or less. The Ca and REM contents may also be respectively 0.010% or less, 0.005% or less, or 0.003% or less.

Note that, "REM" is the general name of the 17 elements of atomic number 21 scandium (Sc), atomic number 39 yttrium (Y), and the lanthanoid atomic number 57 lanthanum (La) to atomic number 71 lutetium (Lu). The REM content is the total content of these elements.

[As: 0 to 0.100%]

As is an element effective for improvement of the corrosion resistance. The As content may also be 0%, but to sufficiently obtain such an effect, the As content is preferably 0.001% or more. The As content may also be 0.002% or more or 0.003% or more. On the other hand, even if As is contained much more, the effect becomes saturated. Inclusion of more than necessary in the steel material invites a rise in production costs. Therefore, the As content is preferably 0.100% or less. The As content may also be 0.008% or less or 0.005% or less.

[Ir: 0 to 1.000%]

Ir is an element segregating at the former austenite grain boundaries and making the strength of the grain boundaries rise. The Ir content may also be 0%, but to sufficiently obtain such an effect, the Ir content is preferably 0.001% or more. The Ir content may also be 0.003% or more, 0.005% or more, or 0.010% or more. On the other hand, even if containing much more Ir, the effect becomes saturated. Inclusion of more than necessary in the steel material invites a rise in production costs. Therefore, the Ir content is preferably 1.000% or less. The Ir content may also be 0.500% or less, 0.100% or less, 0.030% or less, or 0.015% or less.

In the steel sheet, the balance other than the above elements is comprised of Fe and impurities. The "impurities" are constituents entering due to various factors in the production process such as ore, scrap, and other starting materials when industrially producing the steel sheet.

$$[Mn/(Si+Mn)>0.80]$$

As explained above, in the steel sheet of the present embodiment, the contents of Si and Mn have to satisfy the relationship of Mn/(Si+Mn)>0.80. Note that, in this relationship, "Mn" means the Mn content in mass% units. Similarly, "Si" means the Si content in mass% units.

It is known that the Si and Mn in a steel sheet form oxides during annealing. However, if the Si content in the steel sheet is large (for example, 1.00 mass% or more) and the Mn content is small, Mn oxides become difficult to form at the surface of the steel sheet, therefore there is a possibility that a sufficient amount of Mn oxides cannot be formed at the surface of the steel sheet.

Therefore, in the steel sheet of the present embodiment, by making the Mn content sufficiently large to an extent where Mn/(Si+Mn) exceeds 0.80, promotion of formation of external oxides of Mn and formation of a sufficient amount of Mn oxides at the surface of the steel sheet are realized.

Note that, Mn/(Si+Mn) may also be 0.81 or more, 0.82 or more, 0.83 or more, 0.84 or more, or 0.85 or more. Further, the upper limit of Mn/(Si+Mn) may be 1.00, 0.99, 0.98, 0.97, 0.96, or 0.95.

The chemical composition of the steel sheet may be measured by a general analysis method. For example, the chemical composition of the steel sheet may be measured using ICP-AES (inductively coupled plasma-atomic emission spectrometry) on cutting scraps based on JIS G 1201: 2022. Specifically, for example, a 35 mm square test piece is taken from near the sheet thickness 1/4 position of the steel sheet and identified by measurement by an ICPS-8100 etc. (measurement device) made by Shimadzu based on a calibration curve prepared in advance. C and S, which cannot be measured by ICP-AES, can be measured using the combustion-infrared absorption method, and N using the inert gas melting-thermal conductivity method.

[Number $N_{30}$ Per 10 $\mu$m of Mn Oxides Exposed at Surface of Steel Sheet With Magnitude of Circle Equivalent Diameter of 30 nm or More]

$$[N_{30} \geq 20]$$

The steel sheet of the present embodiment, as explained above, is provided with the characterizing feature that the number $N_{30}$ per 10 $\mu$m of Mn oxides exposed at the surface of the steel sheet with a magnitude of circle equivalent diameter of 30 nm or more satisfies $N_{30} \geq 20$.

Here, in this Description, the "surface of the steel sheet" means the outermost surface of the steel sheet. If the steel sheet has a conversion coating, it means the interface of the conversion coating and the back iron. Note that, in this Description, the "steel sheet surface layer" is the region near the surface of the steel sheet. Specifically, it means the region between the 0.1 $\mu$m depth position in the thickness direction from the surface of the steel sheet and the 2.0 $\mu$m depth position in the thickness direction from the surface of the steel sheet. Note that, in this Description, the "steel sheet surface layer" will sometimes be simply called the "surface layer".

Further, the "Mn oxides exposed at the surface of the steel sheet with a magnitude of circle equivalent diameter of 30 nm or more" are external oxides of Mn with a magnitude R of circle equivalent diameter measured by the method of measurement explained later becoming 30 nm or more. The "Mn oxides" include not only oxides of only Mn (MnO), but also composite oxides of Mn and Si etc. (specifically, $Mn_2SiO_4$, $MnSiO_3$, and $MnCr_2O_4$).

Such Mn oxides exposed at the surface of the steel sheet can be realized by the specific technique of making the chemical composition of the obtained steel sheet contain Mn in 1.20 to 3.00%, Ni in 0.010 to 1.000%, Cu in 0.010 to 1.000%, Sn in 0.003 to 1.000%, and Si in 0.01 to less than 0.75% and satisfy Mn/(Si+Mn)>0.80, brush grinding the hot rolled steel sheet after pickling, and performing an annealing step under specific dew point and temperature conditions. Note that, the specific method of production of the steel sheet of the present embodiment will be explained later.

As explained above, if a large amount of Mn oxides exposed at the surface of the steel sheet with a magnitude of circle equivalent diameter of 30 nm or more, that is, a number $N_{30}$ per 10 $\mu$m of Mn oxides satisfying $N_{30} \geq 20$, are formed at the surface of the steel sheet, at the time of chemical conversion, the Mn oxides will dissolve in place of the base material and enable the precipitation of a sufficient amount of chemical conversion crystals and enable realization of an excellent chemical convertibility even if a certain time elapses after degreasing.

In the present embodiment, from the viewpoint of a more excellent chemical convertibility being obtained, the number $N_{30}$ per 10 $\mu$m of Mn oxides exposed at the surface of the steel sheet with a magnitude of circle equivalent diameter of 30 nm or more preferably satisfies $N_{30} \geq 30$. Note that the number $N_{30}$ per 10 $\mu$m of Mn oxides exposed at the surface of the steel sheet with a magnitude of circle equivalent diameter of 30 nm or more may also be 32 or more, 34 or more, 36 or more, 38 or more, or 40 or more. Further, the number $N_{30}$ per 10 $\mu$m of Mn oxides exposed at the surface of the steel sheet with a magnitude of circle equivalent diameter of 30 nm or more may also be 60 or less or 50 or less.

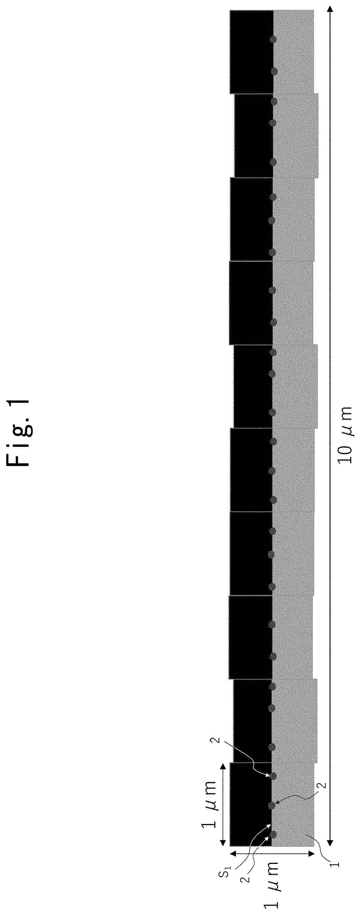

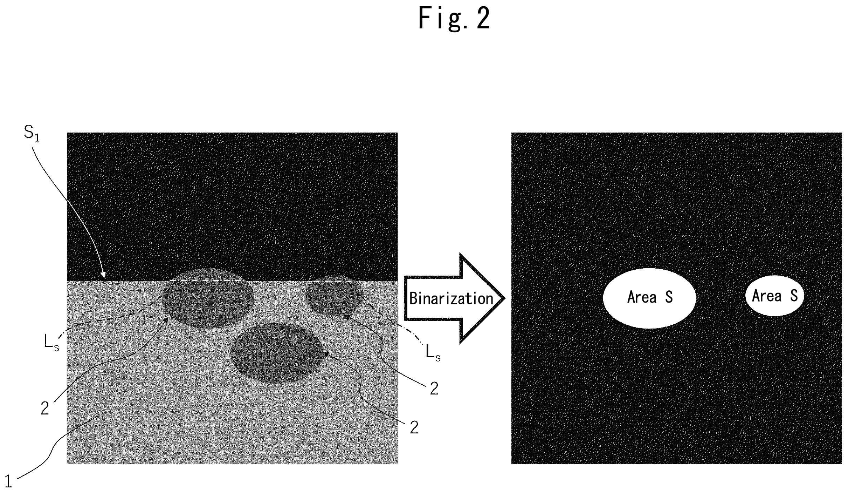

The number $N_{30}$ per 10 $\mu$m of Mn oxides exposed at the surface of the steel sheet with a magnitude of circle equivalent diameter of 30 nm or more can be measured as explained below by analysis by energy dispersive X-ray spectroscopy using a transmission electron microscope (TEM/EDS). Here, FIG. 1 is a schematic view for explaining the method of measurement of the number $N_{30}$ per 10 $\mu$m of Mn oxides exposed at the surface of the steel sheet with a magnitude of circle equivalent diameter of 30 nm or more. FIG. 2 is a schematic view for explaining the method of measurement of the magnitude R of circle equivalent diameter of Mn oxides exposed at the surface of the steel sheet.

(Method of Measurement of Number $N_{30}$ Per 10 $\mu$m of Mn Oxides Exposed at Surface of Steel Sheet With Magnitude of Circle Equivalent Diameter of 30 nm or More)

In TEM/EDS analysis, first a sample is taken so that a cross-section parallel to an L direction (rolling direction) and thickness direction (sheet thickness direction) of the steel sheet to be measured becomes the observed surface. Note that if the rolling direction is unclear, cross-sections cut in the thickness direction at orientations of 0°, 45°, 90°, and 135° with respect to any direction are examined and the cross-section with the highest aspect ratio of precipitates among them is deemed the cross-section parallel to the rolling direction and thickness direction.

Next, as pretreatment for the TEM/EDS analysis, FIB is used to prepare a carbon protective film on the surface of the sampling location. Next, the FIB-cross-section $\mu$-sampling method is used to prepare a thin film sample. As the FIB-SEM, for example an NB5000 made by Hitachi High-Tech Corporation is used. The acceleration voltage at the time of FIB processing is made 5 to 40 kV and an Mo mesh is used.

Further, as the TEM, for example a JEM-2100F made by JEOL Ltd. is used, as the EDS analysis apparatus, for example, a JED-300T made by JEOL Ltd. is used, and the TEM/EDS analysis is performed under conditions of an acceleration voltage of 200 kV. The examination is conducted by the BF-STEM image. The power of the examination is for example 500000X. Consecutive photos such as shown in FIG. 1 are prepared to obtain 10 $\mu$m or more range BF-STEM image and EDS mapping image. Note that FIG. 1 schematically shows the form of the plurality of Mn oxides 2 exposed at the surface $S_1$ of the steel sheet 1 in consecutive photos of a measurement field of 1 $\mu$m$\times$1 $\mu$m.

Further, from the 10 $\mu$m or more range BF-STEM image and EDS mapping image obtained in the above way, the number $N_{30}$ per 10 $\mu$m of Mn oxides exposed at the surface of the steel sheet with a magnitude R of circle equivalent diameter of 30 nm or more is counted.

Here, "Mn oxides exposed at the surface of the steel sheet" indicate, for example, as shown in FIG. 2, the Mn oxides 2 crossing a line segment $L_s$ running along a surface $S_1$ of the steel sheet in a cross-section obtained by cutting the steel sheet 1 in the thickness direction.

The magnitude R (nm) of Mn oxides exposed at the surface of the steel sheet is calculated by the following formula $R=(S/\pi)^{0.5}$ when, as shown in FIG. 2, dividing the obtained mapping image of Mn into Mn oxide parts and steel parts by binarization (min=0, max=255) using the image analysis software "ImageJ" and measuring the area S (nm$^2$) of the oxide parts.

Note that for the Mn oxides, parts deemed Mn oxide parts by binarization by "ImageJ" of the mapping image of Mn and identified as Mn oxides (MnO, $MnCr_2O_4$, $Mn_2SiO_4$, and $MnSiO_3$) by analysis of the diffraction image in TEM/EDS analysis are defined as Mn oxides.

The number $N_{30}$ per 10 $\mu$m of Mn oxides exposed at the surface of the steel sheet with a magnitude R of circle equivalent diameter of 30 nm or more is measured at five randomly selected locations. The arithmetic average value is used.

Further, if the steel sheet being measured is a chemically converted steel sheet, the oxides exposed at the surface of the steel sheet are deemed oxides exposed at the surface of the steel sheet at parts where chemical conversion crystals have not yet deposited while are deemed oxides present between the chemical conversion crystals and back iron interface at parts where chemical conversion crystals have deposited.

[Cu Concentration Measured by High Frequency Glow Discharge Optical Emission Spectrometry in Thickness Direction From Surface of Steel Sheet]

[(Depth 5 nm Cu Concentration)/(Depth 10 $\mu$m Cu Concentration)$\leq$10.0]

Further, in the steel sheet of the present embodiment, the Cu concentration measured by high frequency glow discharge optical emission spectrometry (GDS) in the thickness direction from the surface of the steel sheet preferably satisfies (depth 5 nm Cu concentration)/(depth 10 $\mu$m Cu concentration)$\leq$10.0. Note that, the "depth 5 nm Cu concentration" means the Cu concentration at a depth 5 nm position in the thickness direction from the surface of the steel sheet. Similarly, the "depth 10 $\mu$m Cu concentration" means the Cu concentration at a depth 10 $\mu$m position in the thickness direction from the surface of the steel sheet.

As explained above, Cu concentrates at the surface of the steel sheet at the time of the annealing step to promote the oxidation of Si contained in the steel and, if Cr is contained, the Cr, so as to form external oxides of these elements at the surface of the steel sheet. For this reason, it becomes difficult for external oxides of Mn to be formed at the surface of the steel sheet. Therefore, in the steel sheet of the present embodiment, by reducing the parts where Cu is concentrated at the surface of the steel sheet (below, sometimes referred to as "Cu concentrated parts"), it is possible to make a greater amount of Mn oxides form at the surface of the steel sheet and possible to realize more excellent chemical convertibility. Note that the "Cu concentrated parts" formed at the surface of the steel sheet are not only parts more concentrated in Cu compared with the center part in the thickness direction of the steel sheet, but also more concentrated in Cu compared with other parts at the surface of the steel sheet.

The means for reducing the Cu concentrated parts at the surface of the steel sheet is explained in detail in the method of production explained later, but can be realized by brush grinding the surface of the steel sheet after pickling the hot rolled steel sheet.

From the viewpoint of further improving the chemical convertibility, the Cu concentration measured by GDS in the thickness direction from the surface of the steel sheet more preferably satisfies (depth 5 nm Cu concentration)/(depth 10 $\mu$m Cu concentration)$\leq$7.0. Note that the (depth 5 nm Cu concentration)/(depth 10 $\mu$m Cu concentration) may also be 6.5 or less, 6.0 or less, or 5.5 or less. Furthermore, the (depth 5 nm Cu concentration)/(depth 10 $\mu$m Cu concentration) may also be 0 or more, 1.0 or more, 1.5 or more, 2.0 or more, or 2.5 or more.

The Cu concentration by GDS measurement may be measured in accordance with the method of measurement explained below.

(Method of Measurement of Cu Concentration by GDS Measurement in Thickness Direction From Surface of Steel Sheet)

GDS measurement of the Cu concentration is performed using a high frequency glow discharge optical emission spectrometer. Specifically, the method is used of rendering the surface of the steel sheet being measured an Ar atmosphere, applying voltage to generate glow plasma, and sputtering the surface of the steel sheet in that state while analyzing the concentration in the depth direction. Further, atoms are excited in the glow plasma generating an optical emission spectrum distinctive to the Cu element. From the wavelength, the Cu element contained in the steel sheet is identified. The optical emission intensity of the identified Cu element is estimated.

The data in the depth direction can be estimated from the sputtering time. Specifically, by finding the relationship between the sputtering time and sputtering depth using standard samples in advance, it is possible to convert a sputtering time to a sputtering depth. Therefore, the sputtering depth converted from the sputtering time can be defined as the depth in the thickness direction from the surface of the steel sheet.

Note that, when the steel sheet to be measured is a chemically converted steel sheet, the surface of the steel sheet is made the interface of the back iron and the conversion coating.

The GDS measurement can be performed using a commercially available analysis apparatus. In the present embodiment, a high frequency glow discharge optical emission spectrometer "GDS850A" made by LECO Japan Corporation is used. The measurement conditions are as follows:

Ar gas pressure: 0.3 MPa
Anode diameter: 4 mm$\varphi$
RF output: 30W
Measurement time: 200 to 1500 seconds

[Conversion coating]

The steel sheet of the present embodiment may have a conversion coating on its surface. The steel sheet of the present embodiment is formed with a certain amount of a large amount of Mn oxides at the surface of the steel sheet and has excellent chemical convertibility, therefore can be formed with a close knit high structural uniformity conversion coating at the surface of the steel sheet. As a result, excellent corrosion resistance can be exhibited.

Note that, as the chemical conversion used for formation of a conversion coating, for example, a known zinc phosphate-based chemical conversion solution or a zirconium-based chemical conversion solution may be mentioned.

Furthermore, the steel sheet of the present embodiment preferably has a ratio of hopeite ($Zn_3(PO_4)_2 \cdot 4H_2O$) in the chemical conversion crystals at the conversion coating, measured by X-ray diffraction (XRD), of 50% or more.

In the case of chemical conversion using a zinc phosphate-based chemical conversion solution, chemical conversion crystals are formed starting from the Mn oxides formed at the surface of the steel sheet whereby the ratio of hopeite becomes higher. If the ratio of hopeite in the chemical conversion crystals in the chemical conversion is 50% or more, a certain amount or more of a large amount of Mn oxides is reliably formed at the surface of the steel sheet, therefore it is possible to more reliably realize the above-mentioned excellent chemical convertibility.

Here, the ratio of hopeite in the chemical conversion crystals in the conversion coating is the ratio calculated by the following formula where H: integrated intensity of hopeite peaks and P: integrated intensity of phosphophylitte peaks:

$$\text{Ratio of hopeite } (\%) = H/(H+P) \times 100$$

Note that the integrated intensities of the peaks are found using a Cr tube for XRD analysis, separating the peaks

of phosphophylitte ($2\theta=14.88°$) and the peaks of hopeite ($2\theta=14.55°$), and calculating them from the integrated values of the respective peak intensities.

The XRD analysis may be performed under the following conditions using as the X-ray diffraction apparatus a for example "EMPYREAN®" made by Malvern Panalytical Co.

> Tube: Cr
> Detector: 1Der
> Output: 45 kV, 40 mA
> Measurement range: $2\theta=10$ to 130°

(Thickness of Steel Sheet)

In the present embodiment, the thickness of the steel sheet may be a general sheet thickness. As such a sheet thickness, for example, a 0.2 to 8.0 mm sheet thickness may be mentioned. Furthermore, the thickness of the steel sheet may also be 0.3 mm or more, 0.6 mm or more, 1.0 mm or more, 1.6 mm or more, or 2.0 mm or more. Similarly, the thickness of the steel sheet may also be 7.0 mm or less, 6.0 mm or less, 5.0 mm or less, or 4.0 mm or less.

Note that, if the steel sheet has a conversion coating, the overall thickness of the steel sheet is comprised of the above-mentioned sheet thickness plus the thickness of the conversion coating. The thickness of the conversion coating may be, for example, 1 $\mu$m or more, 5 $\mu$m or more, 10 $\mu$m or more, 15 $\mu$m or more, or 20 $\mu$m or more. Further, the thickness of the conversion coating may also be, for example, 60 $\mu$m or less, 55 $\mu$m or less, 50 $\mu$m or less, 45 $\mu$m or less, or 40 $\mu$m or less.

(Mechanical Properties)

[Vickers Hardness]

The steel sheet of the present embodiment may also have, as strength, for example, a 90 HV or more Vickers hardness. The Vickers hardness of the steel sheet may also be 150 HV or more, 190 HV or more, 200 HV or more, 250 HV or more, 300 HV or more, 350 HV or more, 400 HV or more, or 450 HV or more. Further, the Vickers hardness of the steel sheet may also be 650 HV or less, 600 HV or less, 550 HV or less, or 500 HV or less.

Note that, the Vickers hardness is determined as follows based on JIS Z 2244-1: 2024.

First, a test piece is cut out from any position of the steel sheet except the end parts so that a cross-section vertical to the surface (sheet thickness cross-section) can be observed. The sheet thickness cross-section of the test piece cut out is polished using #600 to #1500 silicon carbide paper.

Next, a solution comprised of particle size 1 to 6 $\mu$m diamond powder dispersed in alcohol or other diluent or pure water is used to polish the sheet thickness cross-section of the test piece to a mirror finish. The sheet thickness cross-section is made the measured surface.

Next, a micro-Vickers hardness tester is used to measure the Vickers hardness by a load of 1 kgf at intervals of 3 times or more of the indentations. Specifically, a total of 20 points are randomly measured near the 1/4 position of sheet thickness of the test piece. The arithmetic average of these values is determined as the Vickers hardness of the steel sheet.

<Part>

The steel sheet of the present embodiment, as explained above, can realize excellent chemical convertibility compared with a conventional steel sheet simultaneously containing the three elements of Ni, Cu, and Sn even in the case of the elapse of a certain time after degreasing and in turn can realize excellent corrosion resistance. Therefore, the steel sheet of the present embodiment is useful for use in parts etc. in technical fields in which excellent chemical convertibility and corrosion resistance are demanded. In particular, the steel sheet of the present embodiment is useful in parts etc. in the automobile industry.

In a preferred embodiment, an auto part including the steel sheet according to an embodiment of the present invention is provided. As examples of auto parts, frame parts, bumpers, and other structural parts and reinforcement parts etc. where strength is required may be mentioned. Further, as other examples of auto parts, roofs, hoods, fenders, doors, and other external panel parts where high beauty is demanded may be mentioned. These parts need only contain a steel sheet according to an embodiment of the present invention at least in part. For this reason, these parts at least partially satisfy the features of the steel sheet of the above embodiment. At portions of the steel sheet which do not directly contact the dies in press-forming and other shaping or which directly contact the dies, but where the degree of work is relatively low, the features of the steel sheet do not particularly change before and after shaping. For example, in a part including a steel sheet according to an embodiment of the present invention, the portion of the location where the sample was taken, explained later (that is, a portion avoiding the locations of (i) to (iv) explained later) can be recognized as a nonworked portion. This portion maintains the features of the steel sheet of the above-mentioned embodiment before and after shaping as a part.

The steel sheet according to an embodiment of the present invention, for example, can be employed for the various auto parts explained earlier after being formed with any conversion coating or paint on the surface. Whether an auto part having paint or a conversion coating contains a steel sheet according to an embodiment of the present invention can be judged by removing the paint or conversion coating of the sample obtained from that auto part. The location from which the sample is taken in this case, the paint removal step, and the conversion coating removal step are as follows:

(Location From Which Sample is Taken)

The sample used when performing the various measurements and analyses is taken from the auto part avoiding the locations of the following (i) to (iv).

(i) Welded parts: locations within 20 mm from toes of spot welded parts and locations within 20 mm from toes of arc/laser welded parts.
(ii) Worked parts: worked parts with radii of curvature of less than 15 mm and locations within 5 mm from the worked parts.
(iii) End parts: end parts within 5 mm from cut end parts of a part.
(iv) Red rust: locations within 5 mm from locations at which red rust is visually observed.

(Paint Removal Step)

The surface of the sample cut out from the auto part or steel sheet is coated with a paint remover (Neorever®#160, made by Sansaikako) at room temperature and allowed to stand for 5 minutes. After that, the surface of the sample coated with the paint remover is rubbed using a hard sponge (for example, Kanefil®, made by Aion Co., Ltd.) to peel off the paint from the surface of the sample.

Next, the surface of the sample after peeling off the paint is rinsed and dried. At this time, the residual state of the paint is confirmed by measuring the surface of the rinsed and dried sample (100 $\mu$m square, 5 fields) by SEM-EPMA.

In the elemental distribution map obtained by EPMA, the regions where the C concentration becomes 10 mass% or more are identified and if the area ratio of those regions is 5% or more, it is judged that the paint has insufficiently been removed.

The area ratio of the regions where the C concentration becomes 10 mass% or more is measured by first obtaining an elemental distribution map of C in EPMA setting the C concentration range to 10 to 30%. The specific measurement conditions of the EPMA are as follows:

Apparatus: JXA-8230 electron probe microanalyzer made by JEOL
Acceleration voltage: 15 kV
Emitted current: 0.05 $\mu$A
Surface analysis: WDS
Interval of analysis: 300 $\mu$m or more
Area ratio: average value of 5 fields

Next, the obtained elemental distribution map of C is image processed to measure the area ratios. For the image processing, the image analysis software "ImageJ" is used. Specifically, the elemental distribution map of C is read into ImageJ, then the function "Make Binary" in "Binary" of "Process" is used to binarize the map so that regions with a C concentration of 10 mass% or more are displayed as black and regions with a C concentration of less than 10 mass% are displayed as white. After binarization, the function "Measure" of "Analyze" is used to read the numerical value of the "Area fraction" in the "Results". The read value is determined as the area ratio of the regions with a C concentration of 10 mass% or more.

If the paint is insufficiently peeled off, the paint is repeatedly removed until the area ratio of the regions with a C concentration of 10 mass% or more becomes less than 5%.

(Conversion coating Removal Step)

A sample cut out from an auto part or steel sheet and stripped of paint is stripped of its conversion coating by a suitable method when removal of the conversion coating is necessary for various measurements. For example, when the conversion coating is a zinc phosphate coating, the method based on JIS K 3151: 1996 is performed so as to remove the conversion coating from the surface of the sample. Specifically, the sample after removal of the paint is dipped in a 5% chromic acid aqueous solution heated to 75°C for 15 minutes to thereby remove the conversion coating from the surface of the sample.

Next, the surface of the sample after removal of the conversion coating is rinsed and dried. At this time, the residual state of the chemical conversion crystals is confirmed by measuring the surface of the rinsed and dried sample (100 $\mu$m square, 5 fields) by SEM-EPMA.

In the elemental distribution map obtained by EPMA, the regions where the P concentration becomes 5 mass% or more are identified and if the area ratio of those regions is 5% or more, it is judged that the conversion coating has insufficiently been peeled off.

The area ratio of the regions where the P concentration becomes 5 mass% or more is measured by first obtaining an elemental distribution map of P in EPMA setting the P concentration range to 5 to 10%. Next, the obtained elemental distribution map of P is image processed to measure the area ratios. For the image processing, the image analysis software "ImageJ" is used. Specifically, the elemental distribution map of P is read into ImageJ, then the function "Make Binary" in "Binary" of "Process" is used to binarize the map so that regions with a P concentration of 5 mass% or more are displayed as black and regions with a P concentration of less than 5 mass% are displayed as white. After binarization, the function "Measure" of "Analyze" is used to read the numerical value of the "Area fraction" in the "Results". The read value is determined as the area ratio of the regions with a P concentration of 5 mass% or more.

If the conversion coating is insufficiently peeled off, the conversion coating is repeatedly removed until the area ratio of the regions with a P concentration of 5 mass% or more becomes less than 5%.

<Method of Production of Steel Sheet>

Next, a preferable method of production of a steel sheet according to one embodiment of the present invention will be explained. The following explanation is intended to illustrate the characteristic method for producing a steel sheet according to one embodiment of the present invention and is not intended to limit the steel sheet to one produced by the method of production such as explained below.

The steel sheet of the present embodiment, for example, can be produced by a method of production including a casting step of casting molten steel, adjusted so that the chemical composition of the finally obtained steel sheet becomes the specific chemical composition, so as to form a steel slab, a hot rolling step of hot rolling the steel slab to obtain a hot rolled steel sheet, a pickling step of pickling the hot rolled steel sheet, a brush grinding step of grinding the surface of the pickled steel sheet by a brush roll, a cold rolling step of cold rolling the brush ground hot rolled steel sheet to obtain a cold rolled steel sheet, an annealing step of annealing the cold rolled steel sheet under specific conditions of a dew point when reaching 600°C of -10°C or more, a dew point at a maximum peak temperature of higher by 5°C or more than the dew point of 600°C , and a dwell time between 600 to 700°C of 40 seconds or more, and a chemical conversion step of dipping the steel sheet in a chemical conversion solution to form a conversion coating on the surface of the steel sheet.

In the method of production of the steel sheet of the present embodiment, first the chemical composition of the molten steel is adjusted so that the chemical composition of the finally obtained steel sheet becomes a specific chemical composition with a large content of Mn containing, by mass%, Mn: 1.20 to 3.00%, Ni: 0.010 to 1.000%, Cu: 0.010 to 1.000%, Sn: 0.003 to 1.000%, and Si: 0.01 to less than 0.75% and satisfying Mn/(Si+Mn)>0.80, that is, so that the Mn content becomes greater.

Further, in the method of production of the steel sheet of the present embodiment, the steel slab of the above specific chemical composition is hot rolled and pickled, then the surface of the steel sheet is brush ground so as to remove Cu concentrated parts and Mn poor layer obstructing the formation of external oxides of Mn. Note that the Mn poor layer is formed by an internal oxide layer of Mn of being formed at the time of coiling after hot rolling and therefore an Mn poor layer with a low content of Mn being formed at the steel sheet surface layer. If there is such an Mn poor layer present at the steel sheet surface layer, it becomes hard for oxides of Mn to be formed at the surface of the steel sheet.

Further, in the method of production of the present embodiment, the brush ground steel sheet is cold rolled and the cold rolled steel sheet obtained is annealed under the specific conditions of a dew point when reaching 600°C of -10°C or more, a dew point at the maximum peak temperature 5°C or more higher than the dew point at 600°C, and a dwell time between 600 to 700°C of 40 seconds or more so as to thereby make Si oxides form inside the steel sheet and make a number $N_{30}$ per 10 $\mu$m of Mn oxides with the above magnitude of circle equivalent diameter of 30 nm or more satisfy $N_{30} \geq 20$, that is, make a certain amount or more of an amount of Mn oxides form at the surface of the steel sheet.

Explaining the specific conditions of the annealing step more specifically, first, the cold rolled steel sheet is annealed at a -10°C or more dew point to make formation of oxides of Mn easier. Furthermore, the dew point at the maximum peak temperature is made 5°C or more higher than the dew point at 600°C so that formation of external oxides of Mn becomes dominant over formation of internal composite oxides of Mn and Si. Further, the dwell time between 600 to 700°C is made 40 seconds or more so that Si inside of the steel sheet is consumed to form internal oxides of Si and suppress formation of internal composite oxides of Mn and Si at 700°C or more and thereby predominantly form external oxides of Mn.

According to such a method of production of a steel sheet of the present embodiment, even in a steel sheet containing the three elements of Ni, Cu, and Sn, it is possible to make a certain amount or more of an amount of Mn oxides exposed at the surface of the steel sheet with a magnitude of circle equivalent diameter of 30 nm or more, that is, a number $N_{30}$ per 10 $\mu$m of Mn oxides satisfying $N_{30} \geq 20$, form at the surface of the steel sheet and it is possible to obtain excellent chemical convertibility even in the case of elapse of a certain time after degreasing.

Below, the preferable conditions etc. of the steps in the method of production of the steel sheet of the present embodiment will be explained in detail.

[Casting Step]

In the method of production of a steel sheet of the present embodiment, the casting step is a step of casting molten steel adjusted in chemical composition so as to form a steel slab. The chemical composition has to be adjusted so that the chemical composition of the finally obtained steel sheet becomes a specific chemical composition with a large content of Mn containing, by mass% Mn: 1.20 to 3.00%, Ni: 0.010 to 1.000%, Cu: 0.010 to 1.000%, Sn: 0.003 to 1.000%, and Si: 0.01 to less than 0.75% and satisfying Mn/(Si+Mn)>0.80.

For the conditions of the casting step other than the chemical composition, usual conditions known in the field may be employed. For example, the casting step need only comprise smelting by a blast furnace, electric arc furnace, etc. followed by various secondary refining, then the usual continuous casting, casting by the ingot method, etc.

[Hot Rolling Step]

In the method of production of a steel sheet of the present embodiment, the hot rolling step is a step of hot rolling the steel slab to obtain a hot rolled steel sheet. The hot rolling step is performed by hot rolling the cast steel slab directly or after once cooling, then reheating. When reheating, the heating temperature of the steel slab is, for example, 1100 to 1250°C.

In the hot rolling step, usually rough rolling and finish rolling are performed. The temperatures and rolling reductions of the rolling operations can be suitably determined in accordance with the desired metallostructure and sheet thickness. For example, the end temperature of the finish rolling is 900 to 1050°C and the rolling reduction of the finish rolling is 10 to 50%.

The finish rolled hot rolled steel sheet is coiled up at a predetermined coiling temperature, then is supplied to the next pickling step. In the present embodiment, the hot rolled steel sheet is coiled at a 520°C or more coiling temperature. The coiling temperature may also be 550°C or more. Further, the coiling temperature may also be 600°C or less.

[Pickling Step]

In the method of production of a steel sheet of the present embodiment, the pickling step after hot rolling is a step of pickling the coiled hot rolled steel sheet using a pickling solution. The pickling step may be performed using a generally used pickling solution, for example, a predetermined concentration hydrochloric acid solution containing an inhibitor for inhibiting corrosion of the steel sheet under conditions suitable for removing the Cu concentrated parts and Mn poor layer_of the hot rolled steel sheet.

For example, the pickling step may be performed by dipping the hot rolled steel sheet after hot rolling in a predetermined concentration hydrochloric acid solution for a predetermined time. The pickling solution used in the pickling step is for example a concentration 3 to 12% hydrochloric acid solution. Further, the temperature when dipping the hot rolled steel sheet in the pickling solution is for example 50 to 90°C. Further, the time when dipping the hot rolled steel sheet in the pickling solution is for example 1 to 30 seconds.

Note that the pickling may be performed in one operation or may be performed divided into several operations so as to reliably remove the Cu concentrated parts and Mn poor layer.

[Brush Grinding Step]

In the method of production of a steel sheet of the present embodiment, the brush grinding step is a step of brush grinding the pickled hot rolled steel sheet under conditions of a grinding amount of 3.0 g/m$^2$ or more. By brush grinding under such conditions, it is possible to sufficiently remove the Cu concentrated parts and Mn poor layer obstructing the formation of external oxides of Mn.

Note that, in the brush grinding step, it is possible to remove not only the Cu concentrated parts and Mn poor layer at the surface of the steel sheet, but also the concentrated parts of at least one of the Ni and Sn.

The grinding amount by the brush grinding is preferably as large as possible from the viewpoint of more reliably removing the dissolved Sn at the surface of the steel sheet. For example, 4.0 g/m$^2$ or more is preferable while 5.0 g/m$^2$ or more is more preferable. The upper limit of the grinding amount by the brush grinding is, for example, 20.0 g/m$^2$ or less and may also be 15.0 g/m$^2$ or less.

The grinding amount by the brush grinding can be adjusted by any suitable method known to persons skilled in the art. For example, the grinding amount by the brush grinding can be adjusted by suitably selecting the type of the brush (for example, H115 made by Hotani etc.), the wire material, bristle length, rotational speed, density, brush reduction, coating solution used, etc.

[Cold Rolling Step]

In the method of production of a steel sheet of the present embodiment, the cold rolling step is a step of cold rolling the brush ground hot rolled steel sheet to obtain a cold rolled steel sheet. The rolling reduction of the cold rolling can be suitably determined in accordance with the desired metallostructure, sheet thickness, etc. The rolling reduction of the cold rolling is, for example, 20 to 80%. After the cold rolling step, the steel sheet may, for example, be air cooled to cool it down to room temperature.

[Annealing Step]

In the method of production of a steel sheet of the present embodiment, the annealing step is a step of annealing the cold rolled steel sheet after the cold rolling step under the specific conditions of a dew point when reaching 600°C of -10°C or more, a dew point at the maximum peak temperature 5°C or more higher than the dew point at 600°C, and a dwell time between 600 to 700°C of 40 seconds or more. By annealing the cold rolled steel sheet under such specific conditions, it is possible to make Si oxides form inside the steel sheet and make a certain amount or more of Mn oxides with a magnitude of circle equivalent diameter of 30 nm or more, that is, a number $N_{30}$ per 10 $\mu$m of Mn oxides satisfying $N_{30} \geq 20$, form at the surface of the steel sheet. Further, as a result, it is possible to obtain excellent chemical convertibility even in the case of the elapse of a certain time after degreasing.

Regarding the dew point at the annealing step, from the viewpoint of making formation of Mn oxides easier, the dew point when reaching 600°C has to be made -10°C or more. The dew point may also be -9°C or more or -8°C or more. Further, the dew point may also be +10°C or less, +9°C or less, or +8°C or less.

Further, in the annealing step, from the viewpoint of making formation of external oxides of Mn dominant over formation of internal composite oxides of Mn and Si, the dew point at the maximum peak temperature has to be made 5°C or more higher than the dew point at 600°C. Furthermore, the dew point at the maximum peak temperature is preferably made 10°C or more higher than the dew point at 600°C. Further, the dew point at the maximum peak temperature is preferably made -5°C or more and +20°C or less. By controlling the dew point in the annealing step in such a way, it is possible to make Si oxides form inside of the steel sheet, make Mn oxides form at the surface of the steel sheet, and further make the Si content inside the oxides at the surface of the steel sheet smaller. Further, by making internal oxides of Si form, it is possible to trap the Cu and suppress the concentration of Cu at the steel sheet surface layer.

Further, in the annealing step, from the viewpoint of consuming the Si at the inside of the steel sheet so as to make internal oxides of Si form and suppress the formation of internal composite oxides of Mn and Si at 700°C or more and thereby predominantly making external oxides of Mn form, it is necessary to make the dwell time between 600 to 700°C 40 seconds or more. Note that, if the time of becoming 600 to 700°C is less than 40 seconds, composite oxides of Mn and Si end up forming inside of the steel sheet and it becomes difficult for Mn oxides to form at the surface of the steel sheet.

The dwell time between 600 to 700°C in the annealing step is preferably 60 seconds or more. This dwell time may also be 65 seconds or more or 70 seconds or more. Further, this dwell time may also be 100 seconds or less or 90 seconds or less.

In the annealing step, the conditions other than the above specified conditions need only be conditions suitable for forming Mn oxides at the surface of the steel sheet and annealing the cold rolled steel sheet. For example, the annealing step includes heating in an atmosphere with a dew point when reaching 600°C of -10 to +10°C to a 700 to 950°C annealing temperature and holding for 0 to 300 seconds after reaching that temperature. However, when heating to the 700 to 950°C annealing temperature, it is necessary to make the dwell time between 600 to 700°C 40 seconds or more.

Note that, the annealing temperature is preferably 750°C or more, more preferably 780°C or more. Further, the annealing temperature is preferably 950°C or less, more preferably 900°C or less. The holding time at the annealing temperature is preferably 30 seconds or more, more preferably 50 seconds or more. Further, the holding time is preferably 200 seconds or less, more preferably 150 seconds or less.

The atmosphere in the annealing step may be a reducing atmosphere, more specifically a reducing atmosphere containing nitrogen and hydrogen, for example, a hydrogen concentration 1 to 10% reducing atmosphere (for example, hydrogen 3% and nitrogen balance).

[Chemical Conversion Step]

In the method of production of a steel sheet of the present embodiment, the chemical conversion step is a step of dipping the steel sheet after the post-annealing pickling step in a chemical conversion solution to form a conversion coating on the surface of the steel sheet. The chemical conversion step need only be performed under conditions suitable for forming a conversion coating on the surface of the steel sheet. For example, the chemical conversion step may comprise degreasing the steel sheet by a degreasing agent, rinsing it, then using a surface conditioner to treat the surface of the steel sheet before dipping the pickled steel sheet in a chemical conversion solution.

As the chemical conversion solution used for the chemical conversion step, for example, a known zinc phosphate-based chemical conversion solution or a zirconium-based chemical conversion solution may be mentioned.

The present invention is not limited to the above embodiments or the following examples etc. Suitable combinations or replacements, changes, etc. can be used to an extent not departing from the object or gist of the present invention.

Below, examples will be used to explain the present invention in more detail, but the following examples are just illustrations of the present invention. The present invention is not limited to these examples.

EXAMPLES

In the following examples, steel sheets according to embodiments of the present invention were produced under various conditions and the features of the obtained steel sheets were investigated.

First, each molten steel was cast by the continuous casting method to form a steel slab having a chemical composition shown in Table 1. Further, the steel slab was cooled once, then was reheated to 1200°C and hot rolled and was coiled up at a 520°C or more coiling temperature. The hot rolling was performed by rough rolling and finish rolling. The end temperature of the finish rolling was 900 to 1050°C and the rolling reduction of the finish rolling was 30%.

Next, the obtained hot rolled steel sheet was pickled, then the surface of the steel sheet was brush ground by a 6.0 g/m$^2$ grinding amount using a grinding use brush roll (H115 made by Hotani).

Next, the brush ground hot rolled steel sheet was cold rolled by a rolling reduction of 50% to obtain a cold rolled steel sheet.

Further, this cold rolled steel sheet was annealed under annealing conditions of heating to an 800°C temperature in an oxygen concentration 20 ppm or less furnace in an atmosphere of a dew point shown in Table 2 and hydrogen 3% (nitrogen balance) and holding it there for 100 seconds. Note that, when heating to the annealing temperature, the dwell time between 600 to 700°C was as shown in Table 2.

In the above way, various steel sheets having 1.6 mm thicknesses as examples and comparative examples were obtained. Note that, when analyzing the chemical composition of the thus obtained steel sheets, they were similar to the chemical compositions of the steel slabs before hot rolling.

[Table 1]

Table 1

| Steel type | Chemical composition (mass%), balance: Fe and impurities | | | | | | | | | | | | | | | | Mn/ (Si+Mn) |
|---|---|---|---|---|---|---|---|---|---|---|---|---|---|---|---|---|---|
| | C | Si | Mn | Al | Ni | Cu | Sn | P | S | N | Ti | Nb | B | Mo | Cr | | |
| A1 | 0.096 | 0.29 | 1.24 | 0.020 | 0.011 | 0.011 | 0.003 | 0.015 | 0.044 | 0.0052 | - | - | - | - | - | - | 0.81 |
| A2 | 0.092 | 0.29 | 1.23 | 0.021 | 0.044 | 0.042 | 0.006 | 0.015 | 0.048 | 0.0050 | 0.044 | 0.001 | 0.0002 | 0.018 | 0.018 | - | 0.81 |
| A3 | 0.101 | 0.30 | 1.27 | 0.018 | 0.244 | 0.344 | 0.022 | 0.014 | 0.048 | 0.0052 | 0.044 | 0.002 | 0.0001 | 0.019 | 0.022 | - | 0.81 |
| A4 | 0.100 | 0.30 | 1.28 | 0.019 | 0.988 | 0.994 | 0.099 | 0.013 | 0.044 | 0.0053 | 0.045 | 0.002 | 0.0002 | 0.030 | 0.035 | - | 0.81 |
| A5 | 0.100 | 0.30 | 1.27 | 0.021 | 0.212 | 0.311 | 0.021 | 0.014 | 0.044 | 0.0052 | 0.043 | 0.002 | 0.0002 | 0.018 | 0.023 | V: 0.038, Hf: 0.014 | 0.81 |
| A6 | 0.098 | 0.30 | 1.26 | 0.019 | 0.221 | 0.312 | 0.020 | 0.014 | 0.045 | 0.0055 | 0.044 | 0.002 | 0.0002 | 0.019 | 0.022 | Mg: 0.019, Zr: 0.129 | 0.81 |
| A7 | 0.097 | 0.30 | 1.28 | 0.022 | 0.228 | 0.298 | 0.020 | 0.015 | 0.044 | 0.0052 | 0.044 | 0.002 | 0.0002 | 0.018 | 0.022 | W: 0.278, As: 0.029 | 0.81 |
| A8 | 0.099 | 0.31 | 1.31 | 0.021 | 0.231 | 0.307 | 0.020 | 0.015 | 0.047 | 0.0052 | 0.043 | 0.002 | 0.0002 | 0.019 | 0.021 | Ca: 0.018, Ir: 0.198 | 0.81 |
| A9 | 0.101 | 0.29 | 1.26 | 0.021 | 0.227 | 0.301 | 0.021 | 0.014 | 0.045 | 0.0053 | 0.042 | 0.002 | 0.0002 | 0.019 | 0.023 | Ce: 0.020, La: 0.011 | 0.81 |
| B1 | 0.115 | 0.10 | 1.45 | 0.033 | 0.010 | 0.012 | 0.003 | 0.015 | 0.003 | 0.0060 | - | - | - | - | - | - | 0.94 |
| B2 | 0.112 | 0.09 | 1.44 | 0.034 | 0.039 | 0.047 | 0.005 | 0.016 | 0.003 | 0.0059 | 0.032 | 0.001 | 0.0002 | 0.002 | 0.019 | - | 0.94 |
| B3 | 0.114 | 0.09 | 1.47 | 0.034 | 0.284 | 0.324 | 0.023 | 0.015 | 0.003 | 0.0059 | 0.032 | 0.001 | 0.0003 | 0.014 | 0.026 | - | 0.94 |
| B4 | 0.114 | 0.11 | 1.48 | 0.033 | 0.990 | 1.000 | 0.100 | 0.015 | 0.003 | 0.0055 | 0.033 | 0.001 | 0.0003 | 0.033 | 0.033 | - | 0.93 |
| C1 | 0.150 | 0.45 | 2.38 | 0.020 | 0.010 | 0.011 | 0.003 | 0.011 | 0.002 | 0.0052 | - | - | - | - | - | - | 0.84 |
| C2 | 0.140 | 0.43 | 2.40 | 0.020 | 0.045 | 0.048 | 0.005 | 0.009 | 0.002 | 0.0059 | 0.028 | 0.001 | 0.0017 | 0.002 | 0.016 | - | 0.85 |
| C3 | 0.140 | 0.46 | 2.43 | 0.020 | 0.241 | 0.323 | 0.022 | 0.010 | 0.002 | 0.0058 | 0.027 | 0.002 | 0.0015 | 0.014 | 0.022 | - | 0.84 |
| C4 | 0.150 | 0.46 | 2.39 | 0.020 | 0.994 | 0.993 | 0.091 | 0.010 | 0.002 | 0.0052 | 0.021 | 0.002 | 0.0016 | 0.031 | 0.037 | - | 0.84 |
| D1 | 0.150 | 0.50 | 2.55 | 0.030 | 0.012 | 0.013 | 0.003 | 0.007 | 0.001 | 0.0054 | - | - | - | - | - | - | 0.84 |
| D2 | 0.150 | 0.49 | 2.52 | 0.032 | 0.040 | 0.041 | 0.005 | 0.007 | 0.001 | 0.0054 | 0.032 | 0.002 | 0.0018 | 0.003 | 0.019 | - | 0.84 |
| D3 | 0.150 | 0.49 | 2.55 | 0.033 | 0.232 | 0.338 | 0.028 | 0.007 | 0.001 | 0.0053 | 0.033 | 0.002 | 0.0018 | 0.014 | 0.023 | - | 0.84 |
| D4 | 0.150 | 0.48 | 2.54 | 0.033 | 0.989 | 0.993 | 0.092 | 0.006 | 0.001 | 0.0055 | 0.033 | 0.002 | 0.0019 | 0.039 | 0.033 | - | 0.84 |
| E1 | 0.100 | 0.15 | <u>0.91</u> | 0.012 | 0.234 | 0.310 | 0.020 | 0.012 | 0.003 | 0.0055 | 0.020 | 0.002 | 0.0002 | 0.019 | 0.021 | - | 0.86 |
| E2 | 0.120 | <u>1.00</u> | 2.21 | 0.022 | 0.243 | 0.309 | 0.020 | 0.013 | 0.002 | 0.0054 | 0.020 | 0.002 | 0.0001 | 0.020 | 0.019 | - | <u>0.69</u> |

[Table 2]

[Table 2]

Table 2

| No. | Class | Steel type | Composition | | Brush grinding | Annealing conditions | | | | Dwell time between 600 to 700 °C (s) | Number N30 per 10 μm of Mn oxides of 30 μm or more | (Depth 5 nm Cu conc.)/(depth 10 μm conc.) | Vickers hardness (Hv) | Allowed to stand for 10 minutes in atmosphere after degreasing | Type of chemical conversion | Ratio of hopeite (%) | Performance |
|---|---|---|---|---|---|---|---|---|---|---|---|---|---|---|---|---|---|
| | | | Mn (mass%) | Mn/(Si+Mn) | | Dew point (°C) | | | | | | | | | | | Chemical convertibility |
| | | | | | | When reaching 600°C: A (°C) | When reaching max. temp.: B (°C) | Difference B-A (°C) | | | | | | | | | |
| 1 | Ex. | A1 | 1.24 | 0.81 | Yes | -10 | -3 | 7 | 42 | 22 | 9.4 | 148 | Yes | $Zn_3P_2$ | 38 | A |
| 2 | Ex. | A2 | 1.23 | 0.81 | Yes | -8 | 5 | 13 | 43 | 32 | 9.0 | 150 | Yes | $Zn_3P_2$ | 54 | AA |
| 3 | Ex. | A3 | 1.27 | 0.81 | Yes | -10 | -2 | 8 | 64 | 32 | 6.4 | 150 | Yes | $Zn_3P_2$ | 55 | AA |
| 4 | Ex. | A4 | 1.28 | 0.81 | Yes | -9 | 6 | 15 | 63 | 37 | 6.2 | 151 | Yes | $Zn_3P_2$ | 61 | AAA |
| 5 | Ex. | B1 | 1.45 | 0.94 | Yes | -8 | 3 | 11 | 54 | 30 | 7.5 | 200 | Yes | $Zn_3P_2$ | 55 | AA |
| 6 | Ex. | B2 | 1.44 | 0.94 | Yes | -2 | 4 | 6 | 68 | 30 | 5.8 | 201 | Yes | $Zn_3P_2$ | 58 | AA |
| 7 | Ex. | B3 | 1.47 | 0.94 | Yes | -2 | 10 | 12 | 72 | 34 | 5.9 | 199 | Yes | $Zn_3P_2$ | 69 | AAA |
| 8 | Ex. | B4 | 1.48 | 0.93 | Yes | -2 | 5 | 7 | 49 | 24 | 8.1 | 198 | Yes | $Zn_3P_2$ | 39 | A |
| 9 | Ex. | C1 | 2.38 | 0.84 | Yes | -2 | 5 | 7 | 66 | 38 | 6.4 | 332 | Yes | $Zn_3P_2$ | 56 | AA |
| 10 | Ex. | C2 | 2.40 | 0.85 | Yes | -5 | 6 | 11 | 62 | 38 | 6.7 | 340 | Yes | $Zn_3P_2$ | 59 | AAA |
| 11 | Ex. | C3 | 2.43 | 0.84 | Yes | 5 | 11 | 6 | 41 | 20 | 9.1 | 338 | Yes | $Zn_3P_2$ | 41 | A |
| 12 | Ex. | C4 | 2.39 | 0.84 | Yes | -10 | 9 | 19 | 52 | 32 | 7.7 | 341 | Yes | $Zn_3P_2$ | 59 | AA |
| 13 | Ex. | D1 | 2.55 | 0.84 | Yes | -9 | 5 | 14 | 78 | 39 | 5.5 | 400 | Yes | $Zn_3P_2$ | 62 | AAA |
| 14 | Ex. | D2 | 2.52 | 0.84 | Yes | -10 | -1 | 9 | 55 | 22 | 7.3 | 402 | Yes | $Zn_3P_2$ | 42 | A |
| 15 | Ex. | D3 | 2.55 | 0.84 | Yes | -4 | 9 | 13 | 49 | 32 | 8.3 | 404 | Yes | $Zn_3P_2$ | 58 | AA |
| 16 | Ex. | D4 | 2.54 | 0.84 | Yes | 8 | 14 | 6 | 74 | 32 | 5.6 | 400 | Yes | $Zn_3P_2$ | 58 | AA |
| 17 | Ex. | A1 | 1.24 | 0.81 | Yes | -10 | -3 | 7 | 42 | 22 | 9.4 | 148 | Yes | Zr | - | A |
| 18 | Ex. | A2 | 1.23 | 0.81 | Yes | -8 | 5 | 13 | 43 | 32 | 9.0 | 150 | Yes | Zr | - | AA |
| 19 | Ex. | A3 | 1.25 | 0.81 | Yes | -10 | -2 | 8 | 64 | 32 | 6.4 | 150 | Yes | Zr | - | AA |
| 20 | Ex. | A4 | 1.28 | 0.81 | Yes | -9 | 6 | 15 | 63 | 37 | 6.2 | 151 | Yes | Zr | - | AAA |
| 21 | Ex. | A5 | 1.27 | 0.81 | Yes | -10 | -2 | 8 | 48 | 27 | 8.8 | 161 | Yes | $Zn_3P_2$ | 44 | A |

EP 4 786 630 A1

| No. | Class | Steel type | Composition | | Brush grinding | Annealing conditions | | | Dwell time between 600 to 700 °C (s) | Number N30 per 10 μm of Mn oxides of 30 μm or more | (Depth 5 nm Cu conc.) /(depth 10 μm conc.) | Vickers hard-ness (Hv) | Allowed to stand for 10 minutes in atmosphere after degreasing | Type of chemical conversion | Ratio of hopeite (%) | Performance |
|---|---|---|---|---|---|---|---|---|---|---|---|---|---|---|---|---|
| | | | Mn (mass%) | Mn/ (Si+Mn) | | Dew point (°C) | | | | | | | | | | Chemical convertibility |
| | | | | | | When reaching 600°C: A (°C) | When reaching max. temp.: B (°C) | Difference B-A (°C) | | | | | | | | |
| 22 | Ex. | A6 | 1.26 | 0.81 | Yes | -9 | -3 | 6 | 47 | 26 | 8.4 | 159 | Yes | $Zn_3P_2$ | 46 | A |
| 23 | Ex. | A7 | 1.28 | 0.81 | Yes | -10 | -3 | 7 | 53 | 23 | 7.9 | 163 | Yes | $Zn_3P_2$ | 39 | A |
| 24 | Ex. | A8 | 1.31 | 0.81 | Yes | -8 | 0 | 8 | 52 | 23 | 9.2 | 158 | Yes | $Zn_3P_2$ | 48 | A |
| 25 | Ex. | A9 | 1.26 | 0.81 | Yes | -10 | -2 | 8 | 51 | 22 | 9.1 | 158 | Yes | $Zn_3P_2$ | 41 | A |
| 26 | Comp. ex. | E1 | 0.91 | 0.86 | Yes | -10 | 3 | 13 | 64 | 14 | 6.2 | 148 | Yes | $Zn_3P_2$ | - | B |
| 27 | Ref. ex | E1 | 0.91 | 0.86 | Yes | -10 | 3 | 13 | 64 | 14 | 6.2 | 148 | No | $Zn_3P_2$ | 14 | AA |
| 28 | Comp. ex. | E2 | 2.21 | 0.69 | Yes | -7 | 8 | 15 | 63 | 16 | 6.3 | 340 | Yes | $Zn_3P_2$ | - | B |
| 29 | Ref. ex | E2 | 2.21 | 0.69 | Yes | -7 | 8 | 15 | 63 | 16 | 6.3 | 340 | No | $Zn_3P_2$ | 18 | AA |
| 30 | Comp. ex. | A3 | 1.25 | 0.81 | No | -7 | 5 | 12 | 65 | 13 | 13.2 | 150 | Yes | $Zn_3P_2$ | - | B |
| 31 | Comp. ex. | B2 | 1.44 | 0.94 | Yes | -12 | 2 | 14 | 62 | 18 | 6.7 | 199 | Yes | $Zn_3P_2$ | - | B |
| 32 | Ref. ex | B2 | 1.44 | 0.94 | Yes | -12 | 2 | 14 | 62 | 18 | 6.7 | 199 | No | $Zn_3P_2$ | 14 | AA |
| 33 | Comp. ex. | C3 | 2.43 | 0.84 | Yes | -8 | -5 | 3 | 62 | 11 | 6.8 | 338 | Yes | $Zn_3P_2$ | - | B |
| 34 | Ref. ex | C3 | 2.43 | 0.84 | Yes | -8 | -5 | 3 | 62 | 11 | 6.8 | 338 | No | $Zn_3P_2$ | 22 | AA |
| 35 | Comp. ex. | D3 | 2.55 | 0.84 | Yes | -7 | 4 | 11 | 33 | 18 | 11.2 | 404 | Yes | $Zn_3P_2$ | - | B |
| 36 | Ref. ex | D3 | 2.55 | 0.84 | Yes | -7 | 4 | 11 | 33 | 17 | 11.2 | 404 | No | $Zn_3P_2$ | 22 | AA |

Each of the various steel sheets obtained in the above way was measured in accordance with the measurement methods explained below for the number $N_{30}$ per 10 $\mu$m of Mn oxides exposed at the surface of the steel sheet with a magnitude of circle equivalent diameter of 30 nm or more, the Cu concentration by GDS measurement in the thickness direction from the surface of the steel sheet, the Vickers hardness, and the ratio of hopeite in the chemical conversion crystals at the conversion coating.

Further, the painted corrosion resistance of each of the steel sheets was evaluated by the following method of evaluation. The results of these measurements and evaluations are shown in Table 2. Note that, the underlines given to the numerical values in Table 1 and Table 2 indicate values outside the scope of the present invention or not preferable production conditions.

(Method of Measurement of Number $N_{30}$ Per 10 $\mu$m of Mn Oxides Exposed at Surface of Steel Sheet With Magnitude of Circle Equivalent Diameter of 30 nm or More)

First a sample is taken so that a cross-section parallel to an L direction (rolling direction) and thickness direction (sheet thickness direction of the steel sheet to be measured becomes the observed surface. Note that if the rolling direction is unclear, cross-sections cut in the thickness direction at orientations of 0°, 45°, 90°, and 135° with respect to any direction are examined and the cross-section with the highest aspect ratio of precipitates among them is deemed the cross-section parallel to the rolling direction and thickness direction.

Next, as pretreatment for the TEM/EDS analysis, FIB is used to prepare a carbon protective film on the surface of the sampling location. Next, the FIB-cross-section $\mu$-sampling method is used to prepare a thin film sample. As the FIB-SEM, for example an NB5000 made by Hitachi High-Tech Corporation is used. The acceleration voltage at the time of FIB processing is made 5 to 40 kV and an Mo mesh is used.

Further, as the TEM, for example a JEM-2100F made by JEOL Ltd. is used, as the EDS analysis apparatus, for example, a JED-300T made by JEOL Ltd. is used, and the TEM/EDS analysis is performed under conditions of an acceleration voltage of 200 kV. The examination is conducted by the BF-STEM image. The power of the examination is for example 500000X. Consecutive photos such as shown in FIG. 1 are prepared to obtain a 10 $\mu$m or more range BF-STEM image and EDS mapping image.

Further, from the 10 $\mu$m or more range BF-STEM image and EDS mapping image obtained in the above way, the number $N_{30}$ per 10 $\mu$m of Mn oxides exposed at the surface of the steel sheet with a magnitude R of circle equivalent diameter of 30 nm or more is counted.

The magnitude R (nm) of Mn oxides exposed at the surface of the steel sheet is calculated by the following formula $R=(S/\pi)^{0.5}$ when, as shown in FIG. 2, dividing the obtained mapping image of Mn into Mn oxide parts and steel parts by binarization (min=0, max=255) using the image analysis software "ImageJ" and measuring the area S (nm$^2$) of the oxide parts.

Note that for the Mn oxides, parts deemed Mn oxide parts by binarization by "ImageJ" of the mapping image of Mn and identified as Mn oxides (MnO, $MnCr_2O_4$, $Mn_2SiO_4$, and $MnSiO_3$) by analysis of the diffraction image in TEM/EDS analysis are defined as Mn oxides.

The number $N_{30}$ per 10 $\mu$m of Mn oxides exposed at the surface of the steel sheet with a magnitude R of circle equivalent diameter of 30 nm or more is measured at five randomly selected locations. The arithmetic average value is used.

Further, if the steel sheet being measured is a chemically converted steel sheet, the oxides exposed at the surface of the steel sheet are deemed oxides exposed at the surface of the steel sheet at parts where chemical conversion crystals have not yet deposited while are deemed oxides present between the chemical conversion crystals and back iron interface at parts where chemical conversion crystals have deposited.

(Method of Measurement of Cu Concentration by GDS Measurement in Thickness Direction From Surface of Steel Sheet)

GDS measurement of the Cu concentration is performed using a high frequency glow discharge optical emission spectrometer. Specifically, the method is used of rendering the surface of the steel sheet being measured an Ar atmosphere, applying voltage to generate glow plasma, and sputtering the surface of the steel sheet in that state while analyzing the concentration in the depth direction. Further, atoms are excited in the glow plasma generating an optical emission spectrum distinctive to the Cu element. From the wavelength, the Cu element contained in the steel sheet is identified. The optical emission intensity of the identified Cu element is estimated.

The data in the depth direction can be estimated from the sputtering time. Specifically, by finding the relationship between the sputtering time and sputtering depth using standard samples in advance, it is possible to convert a sputtering time to a sputtering depth. Therefore, the sputtering depth converted from the sputtering time can be defined as the depth in the thickness direction from the surface of the steel sheet.

Note that, when the steel sheet to be measured is a chemically converted steel sheet, the surface of the steel sheet is made the interface of the back iron and the conversion coating.

The GDS measurement can be performed using a commercially available analysis apparatus. In the present embodiment, a high frequency glow discharge optical emission spectrometer "GDS850A" made by LECO Japan Corporation is used. The measurement conditions are as follows:

    Ar gas pressure: 0.3 MPa
    Anode diameter: 4 mm$\varphi$
    RF output: 30W
    Measurement time: 200 to 1500 seconds

(Method of Measurement of Vickers Hardness)

First, a test piece is cut out from any position from any position except the end parts of the steel sheet so that a cross-section vertical to the surface (sheet thickness cross-section) can be observed. The sheet thickness cross-section of the cut out test piece is polished using #600 to #1500 silicon carbon paper.

Next, a liquid comprised of particle size 1 to 6 $\mu$m diamond powder dispersed in alcohol or other diluent or pure water is used to polish the sheet thickness cross-section of the test piece to a mirror finish. The sheet thickness cross-section is made the measured surface.

Next, a micro-Vickers hardness tester is used to measure the Vickers hardness of a test piece by a load of 1 kgf at intervals of 3 times or more of the indentations. Specifically, a total of 20 points are randomly measured near the 1/4 position of sheet thickness of the test piece. The arithmetic average of these values is determined as the Vickers hardness of the steel sheet.

(Method of Measurement of Ratio of Hopeite in Chemical Conversion Crystals at Conversion coating)

The ratio of hopeite ($Zn_3(PO_4)_2 \cdot 4H_2O$)in the chemical conversion crystals at the conversion coating by X-ray diffraction (XRD) is measured.

Here, the ratio of hopeite in the chemical conversion crystals in the conversion coating is the ratio calculated by the following formula where H: integrated intensity of hopeite peaks and P: integrated intensity of phosphophylitte peaks:

$$\text{Ratio of hopeite (\%)} = H/(H+P) \times 100$$

Note that the integrated intensities of the peaks are found using a Cr tube for XRD analysis, separating the peaks of phosphophylitte ($2\theta=14.88°$) and the peaks of hopeite ($2\theta=14.55°$), and calculating them from the integrated values of the respective peak intensities.

The XRD analysis may be performed under the following conditions using as the X-ray diffraction apparatus a for example "EMPYREAN®" made by Malvern Panalytical Co.

    Tube: Cr
    Detector: 1Der
    Output: 45 kV, 40 mA
    Measurement range: $2\theta=10$ to $130°$

[Evaluation of Chemical Convertibility]

The chemical convertibility of the steel sheet was evaluated in the following way.

First, a 50 mm$\times$50 mm sample of the produced steel sheet to be evaluated was degreased under the following conditions.

Degreasing: The sample was dipped in a degreasing agent (Fine Cleaner E2083) at 40°C for 2 minutes, then rinsed. Next, the sample of the steel sheet was dried, then allowed to stand for 10 minutes in the atmosphere (in Table 2, a sample allowed to stand for 10 minutes at atmospheric pressure is shown as "Yes"). Further, for comparison, the chemical convertibility was evaluated even under conditions of not allowing the sample to stand for 10 minutes in the atmosphere after degreasing, but degreasing it, then quickly treating it by the next chemical conversion (in Table 2, a sample not allowed to stand for 10 minutes at atmospheric pressure is shown as "No").

Next, the degreased sample of the steel sheet was treated by the following (i) zinc phosphate (Zn phosphate) or (ii) zirconium (Zr) as chemical conversion.

(i) Zn phosphate treatment

Surface conditioning: the sample was dipped in a surface conditioner (Prepalene Z) at ordinary temperature for 30 seconds.

Chemical conversion: the sample was dipped in a zinc phosphate treatment agent (Palbond L3020 conversion agent) at 40°C for 2 minutes, then rinsed and dried.

(ii) Zr treatment

Chemical conversion: the sample was dipped in a Zr-based treatment agent (PLC-2010) at 45°C for 2 minutes, then rinsed and dried.

Next, the sample of the steel sheet treated for chemical conversion was measured by SEM-EPMA at the surface of the sample (100 $\mu$m square, five fields). In the elemental distribution map by EPMA, regions with a P concentration of 0.5 mass% or more or a Zr concentration of 0.2 mass% or more were identified, then the area ratio of the regions was measured.

The area ratio of regions with a P concentration of 0.5 mass% or more or a Zr concentration of 0.2 mass% or more was measured by obtaining an elemental distribution map of P or Zr in EPMA set to a P concentration range of 0.5 mass% or more or Zr concentration range of 0.2 mass% or more, then image processing the elemental distribution map of P or Zr obtained.

For the image processing, the image analysis software "ImageJ" was used. Specifically, the elemental distribution map of P or Zr was read into ImageJ, then the function "Make Binary" in "Binary" of "Process" is used to binarize the map so that regions with a P concentration of 0.5 mass% or more or a Zr concentration of 0.2 mass% or more were displayed as black and regions with a P concentration of less than 0.5 mass% or a Zr concentration of less than 0.2 mass% were displayed as white. After binarization, the function "Measure" of "Analyze" was used to read the numerical value of the "Area fraction" in the "Results". The read value was determined as the area ratio of the regions with a P concentration of 0.5 mass% or more or a Zr concentration of 0.2 mass% or more.

Further, the above regions with a P concentration of 0.5 mass% or more or a Zr concentration of 0.2 mass% or more were judged as "parts formed with a conversion coating" and regions other than regions with a P concentration of 0.5 mass% or more or a Zr concentration of 0.2 mass% or more were judged as "parts not formed with a conversion coating". By subtracting from the area of the surface to be measured the area ratio of the regions with a P concentration of 0.5 mass% or more or a Zr concentration of 0.2 mass% or more (parts formed with a conversion coating), the area ratio of the parts not formed with a conversion coating, so-called parts called "bald spots" (below, the area ratio of these parts will be referred to as the "bald spot area ratio") was calculated.

Further, the chemical convertibility of the steel sheet was evaluated by the following evaluation criteria in accordance with the bald spot area ratio.

AAA: bald spot area ratio of less than 10%
AA: bald spot area ratio of 10% or more and less than 15%
A: bald spot area ratio of 15% or more 20% or less
B: bald spot area ratio of more than 20%

A case where the chemical convertibility was evaluated as AAA, AA, and A was evaluated as a steel sheet excellent in chemical convertibility, while a case where the chemical convertibility was evaluated as B was evaluated as a steel sheet poor in chemical convertibility. Further, a case where the item of "allowed to stand for 10 minutes in the atmosphere after degreasing" of Table 2 was "Yes" and the chemical convertibility was evaluated as AAA, AA, and A was evaluated as a steel sheet exhibiting excellent chemical convertibility even in the case where a certain time (that is, 10 minutes) elapses after degreasing. The results are shown in Table 2.

As shown in Table 2, it was learned that the example Nos. 1 to 25 steel sheets with a large Mn content, with an Mn/(Si+Mn) of more than 0.80, and with a number $N_{30}$ per 10 $\mu$m of Mn oxides exposed at the surface of the steel sheet with a magnitude of circle equivalent diameter of 30 nm or more satisfying $N_{30} \geq 20$ were all steel sheets excellent in chemical convertibility.

In particular, it was learned that the example Nos. 2, 3, 5, 6, 9, 12, 15, 16, 18, and 19 steel sheets annealed under conditions of a dew point at the maximum peak temperature in the annealing step of 10°C or more higher than the dew point when reaching 600°C or of a dwell time between 600 to 700°C of 60 seconds or more had a number $N_{30}$ per 10 $\mu$m of Mn oxides exposed at the surface of the steel sheet with a magnitude of circle equivalent diameter of 30 nm or more satisfying $N_{30} \geq 30$ or had a Cu concentration by GDS measurement satisfying (depth 5 nm Cu concentration)/(depth 10 $\mu$m Cu concentration) $\leq 7.0$ and had an extremely excellent chemical convertibility evaluated as AA.

Furthermore, it was learned that the example Nos. 4, 7, 10, 13, and 20 steel sheets annealed under conditions of a dew point at the maximum peak temperature in the annealing step of 10°C or more higher than the dew point when reaching 600°C and of a dwell time between 600 to 700°C of 60 seconds or more had a number $N_{30}$ per 10 $\mu$m of Mn oxides exposed at the surface of the steel sheet with a magnitude of circle equivalent diameter of 30 nm or more satisfying $N_{30} \geq 30$, had a Cu concentration by GDS measurement satisfying (depth 5 nm Cu concentration)/(depth 10 $\mu$m Cu concentration)$\leq 7.0$ and had an extremely excellent chemical convertibility evaluated as AAA.

On the other hand, it was learned that the comparative example Nos. 26, 28, 30, 31, 33, and 35 steel sheets with low contents of Mn or with Mn/(Si+Mn) of 0.80 or less and a number $N_{30}$ per 10 $\mu$m of Mn oxides exposed at the surface of the steel sheet with a magnitude of circle equivalent diameter of 30 nm or more not satisfying $N_{30} \geq 20$ all were steel sheets with poor chemical convertibility evaluated as B.

Specifically, in the No. 26 steel sheet, the Mn content was low and a sufficient amount of Mn oxides were not formed at the surface of the steel sheet, therefore it is surmised that the chemical convertibility became poor as a result. Further, from the results of evaluation of the chemical convertibility of the No. 27 steel sheet produced under the same conditions, it was learned that excellent chemical convertibility is obtained by quickly performing the chemical conversion after degreasing.

In the No. 28 steel sheet, the Si content was high, internal oxidation became dominant, and Mn oxides were not sufficiently formed at the surface of the steel sheet, therefore it is surmised that the chemical convertibility became poor as a result. Further, from the results of evaluation of the chemical convertibility of the No. 29 steel sheet produced under the same conditions, it was learned that excellent chemical convertibility is obtained by quickly performing the chemical conversion after degreasing.

In the No. 30 steel sheet, brush grinding was not performed after pickling and Cu concentrated parts and an Mn poor layer remained, therefore it is surmised that Mn oxides were not sufficiently formed at the surface of the steel sheet.

In the No. 31 steel sheet, the dew point when reaching 600°C was low, internal oxides of Si were not formed, and composite oxides of Mn and Si were formed inside at 700°C or more, therefore it is surmised that Mn oxides were not sufficiently formed at the surface of the steel sheet. Further, from the results of evaluation of the No. 32 steel sheet, it was learned that by quickly performing chemical conversion after degreasing, a good chemical convertibility is obtained.

In the No. 33 steel sheet, the difference between the dew point when reaching 600°C and the dew point when reaching the maximum temperature was small and internal oxides of Mn centered around the Si oxides formed inside became dominant, therefore it is surmised that Mn oxides were not sufficiently formed at the surface of the steel sheet. Further, from the results of evaluation of the chemical convertibility of the No. 34 steel sheet produced under the same conditions, it was learned that excellent chemical convertibility is obtained by quickly performing the chemical conversion after degreasing.

In the No. 35 steel sheet, the dwell time between 600 to 700°C was short, internal oxides of Si were not formed, and Mn was consumed by internal oxidation of Mn and Si composite oxides, therefore it is surmised that Mn oxides were not sufficiently formed at the surface of the steel sheet. Further, from the results of evaluation of the chemical convertibility of the No. 36 steel sheet produced under the same conditions, it was learned that excellent chemical convertibility is obtained by quickly performing the chemical conversion after degreasing.

**Claims**

1. A steel sheet comprising:

   a chemical composition containing, by mass%,
   Mn: 1.20 to 3.00%,
   Ni: 0.010 to 1.000%,
   Cu: 0.010 to 1.000%,
   Sn: 0.003 to 1.000%, and
   Si: 0.01 to less than 0.75% and
   satisfies Mn/(Si+Mn)>0.80, and
   a number $N_{30}$ per 10 $\mu$m of Mn oxides exposed at a surface of the steel sheet satisfies $N_{30} \geq 20$ with a circle equivalent diameter of 30 nm or more.

2. The steel sheet according to claim 1, wherein the number $N_{30}$ per 10 $\mu$m of Mn oxides exposed at the surface of the steel sheet with a circle equivalent diameter of 30 nm or more satisfies $N_{30} \geq 30$.

3. The steel sheet according to claim 1 or 2, wherein a Cu concentration measured by high frequency glow optical emission spectrometry in a thickness direction from a surface of the steel sheet satisfies (depth 5 nm Cu concentration)/(depth 10 $\mu$m Cu concentration)$\leq 10.0$.

4. The steel sheet according to claim 1 or 2, wherein a Cu concentration measured by high frequency glow optical emission spectrometry in a thickness direction from a surface of the steel sheet satisfies (depth 5 nm Cu concentration)/(depth 10 $\mu$m Cu concentration)$\leq$7.0.

5. The steel sheet according to any one of claims 1 to 4, wherein the chemical composition of the steel sheet contains, by mass%,

    Ni: 0.040 to 1.000%,
    Cu: 0.040 to 1.000%, and
    Sn: 0.004 to 1.000%.

6. The steel sheet according to any one of claims 1 to 5, having a conversion coating on the surface of the steel sheet.

7. The steel sheet according to claim 6, wherein a ratio of hopeite in chemical conversion crystals in the conversion coating measured by X-ray diffraction is 50% or more.

8. A part including a steel sheet according to any one of the claims 1 to 7.

Fig. 1

Fig. 2

## INTERNATIONAL SEARCH REPORT

| International application No. |
|---|
| **PCT/JP2025/031062** |

**A. CLASSIFICATION OF SUBJECT MATTER**

*C22C 38/00*(2006.01)i; *C22C 38/16*(2006.01)i; *C21D 9/46*(2006.01)n; *C22C 38/60*(2006.01)n; *C23C 26/00*(2006.01)n
FI: C22C38/00 301T; C22C38/16; C21D9/46 H; C22C38/60; C23C26/00 C

According to International Patent Classification (IPC) or to both national classification and IPC

**B. FIELDS SEARCHED**

Minimum documentation searched (classification system followed by classification symbols)

C22C38/00-38/60; C21D9/46; C23C26/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-116680 A (NKK CORP.) 26 April 1994 (1994-04-26) | 1-8 |
| A | JP 8-13086 A (NKK CORP.) 16 January 1996 (1996-01-16) | 1-8 |
| A | JP 2000-282174 A (NIPPON STEEL CORPORATION) 10 October 2000 (2000-10-10) | 1-8 |
| A | JP 2023-104430 A (NIPPON STEEL CORPORATION) 28 July 2023 (2023-07-28) | 1-8 |
| A | JP 2021-161459 A (JFE STEEL CORPORATION) 11 October 2021 (2021-10-11) | 1-8 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 November 2025** | **18 November 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2025/031062**

| Patent document cited in search report | | | Publication date (day/month/year) | Patent family member(s) | Publication date (day/month/year) |
|---|---|---|---|---|---|
| JP | 6-116680 | A | 26 April 1994 | (Family: none) | |
| JP | 8-13086 | A | 16 January 1996 | (Family: none) | |
| JP | 2000-282174 | A | 10 October 2000 | (Family: none) | |
| JP | 2023-104430 | A | 28 July 2023 | (Family: none) | |
| JP | 2021-161459 | A | 11 October 2021 | (Family: none) | |

Form PCT/ISA/210 (patent family annex) (July 2022)

**REFERENCES CITED IN THE DESCRIPTION**

**Patent documents cited in the description**

- JP 2008190030 A

- JP 2020084238 A